# EUROPEAN PATENT APPLICATION

(11) **EP 4 636 801 A1**
(43) Date of publication of application: **22.10.2025**
(21) Application number: 24881457.6
(22) Date of filing: 14.10.2024
(51) Int. Cl.: H01J 1/22

(54) **TUNGSTEN CARBIDE ALLOY FILAMENT AND PREPARATION METHOD THEREFOR, AND HEATING DEVICE**

(30) Priority: 25.10.2023 CN 202311386323
(71) Applicant: Xiamen Honglu Tungsten-molybdenum Industry Co., Ltd, Xiamen, Fujian 361000 (CN)
(72) Inventor: FANG, Yijin, Xiamen, Fujian 361000 (CN); GUO, Donghong, Xiamen, Fujian 361000 (CN); JIANG, Xiangcao, Xiamen, Fujian 361000 (CN); TANG, Minfeng, Xiamen, Fujian 361000 (CN); WEI, Zongxing, Xiamen, Fujian 361000 (CN); JIANG, Xiaojun, Xiamen, Fujian 361000 (CN); ZHANG, Guoqin, Xiamen, Fujian 361000 (CN); LIU, Liangmu, Xiamen, Fujian 361000 (CN); ZHAO, Hui, Xiamen, Fujian 361000 (CN)
(74) Representative: Groth & Co. KB
(86) International application number: PCT/CN2024/124680
(87) International publication number: WO 2025/087091

(57) **Abstract**

The present invention relates to the technical field of filament cathode materials. Disclosed are a tungsten carbide alloy filament and a preparation method therefor, and a heating device. The tungsten carbide alloy filament comprises a base body (100) and a carbonization layer (200) attached to the outer surface of the base body (100), wherein the grain width of the carbonization layer (200) is 1.0-15.0 µm; the components of the base body (100) and the carbonization layer (200) both comprise tungsten, carbon, oxygen and an M element, the M element being selected from one or a combination of more of La, Y, Sc, Nd, Sm, Lu, Ce, Gd, Tb, Dy, Ho, Pr, Er, Tm, Yb, Eu, Hf and Zr; and the components of the tungsten carbide alloy filament do not contain thorium. The material improves the emission stability of the tungsten alloy filament, and can also reach stable emission capability of a traditional thorium-tungsten filament without adding thorium, thereby solving the problem of relatively poor stable emission capability of an existing thorium-free tungsten filament, and avoiding the radioactive contamination problem of a traditional thorium-tungsten filament.

## Description

### CROSS REFERENCE TO RELATED APPLICATIONS

The present application claims priority to Chinese Patent Application No. 202311386323.4, filed to the China National Intellectual Property Administration on October 25, 2023, entitled "TUNGSTEN CARBIDE ALLOY FILAMENT AND PREPARATION METHOD THEREFOR, AND HEATING DEVICE", and the entire contents of which are incorporated herein by reference.

### TECHNICAL FIELD

The present application relates to the technical field of filament cathode materials, and in particular to a tungsten carbide alloy filament and a preparation method therefor, and a heating device.

### BACKGROUND

The filament cathode is the electron emitter and is widely used in the field of microwave oven magnetrons. The performance of the filament cathode has a great influence on the working characteristics and life of the magnetron and is regarded as the heart of the magnetron. Existing filament materials are mainly made of tungsten-thorium oxide materials or tungsten-rare earth oxides, examples for which are as follows:
The Chinese invention patent with application number CN201010299139 and publication date April 3, 2013, disclosed a method for doping powder for magnetron coils. The process of the invention includes steps such as doping, stirring, and steam drying. It is characterized in that a neutralizing additive ammonia NH₃•H₂O solution is added to the thorium nitrate solution, and the prepared mixed solution is evenly sprayed onto the surface of the blue tungsten WO2.9 placed in the doping pot and stirred. The doping pot is evacuated and heated with water, while stirring while heating. In a vacuum state, the powder is dried by steam heating, and finally a doped tungsten-thorium oxide powder with uniform doping and low impurity content is obtained.

In this invention patent application (application number CN201010299139), when thorium oxide is added to pure tungsten for the magnetron coil material, and the service life of the magnetron coil material can reach more than 1000 hours of continuous operation. However, the cathode product made of this composite material has a high brittle-ductile transition temperature and is difficult to process and form, which can easily lead to the magnetron cathode breaking during production and transportation. In addition, the recrystallization temperature is low, and the magnetron coil will undergo abnormal recrystallization growth during the carbonization process, and often break during use and transportation, causing the magnetron to fail. At the same time, since thorium is a radioactive element, using thorium as the main added raw material will cause pollution to the environment during smelting, production, transportation and usage, and the final products made from thorium will also have potential adverse effects on the health of those exposed to them.

The Chinese invention patent with application number CN201410073749.9 and publication date June 11, 2014, disclosed a non-radiative multi-component composite tungsten cathode material for microwave oven magnetron and a preparation process therefor. The tungsten cathode material contains lanthanum oxide, zirconium oxide, yttrium oxide, lutetium oxide, rhenium and tungsten, wherein each rare earth oxide accounts for 0.5% to 1.5% of the mass percentage of the tungsten electrode material, the total amount of rare earth oxides accounts for 2% to 3% of the mass percentage of the tungsten electrode material, the alloy element rhenium accounts for 1% to 4% of the mass percentage of the tungsten electrode material, and the balance is tungsten. The method for preparing the non-radiative multi-component composite rare earth tungsten alloy electrode material for microwave oven magnetron includes solution preparation, drying, reduction, acid washing, cold isostatic pressing, sintering, vertical melting, medium frequency induction annealing, pressure processing, winding and mechanical straightening.

Regarding this invention patent (application number CN201410073749.9), some peers added multi-rare earth oxides into the tungsten base body to avoid thorium radiation. This obtained material has a strong instantaneous emission capability, but a weak stable emission capability. The service life of this material is far from the life standard of thorium tungsten magnetron coils, and is generally only a few dozen hours. In addition, the use of metallic rhenium is expensive, which is not conducive to industry promotion and use.

In summary, the traditional tungsten-thorium filament is radioactive, which will cause pollution to the environment, and the final products will also have potential adverse effects on the health of those exposed to them. In addition, the existing filaments that do not use thorium addition have the problem of poor stable emission ability. How to solve the above problems is exactly the difficulty that those skilled in the art are committed to overcoming.

### SUMMARY OF THE INVENTION

In order to solve the problems existing in the above-mentioned prior art: the traditional tungsten-thorium filament is radioactive, which will cause pollution to the environment, and the final products will also have potential adverse effects on the health of those exposed to them. In addition, the existing filaments that do not use thorium addition have the defect of poor stable emission ability. The present application provides a tungsten carbide alloy filament, and the specific technical solution is as follows:
The tungsten carbide alloy filament comprises a base body and a carburized layer attached to the outer surface of the base body; the grain width of the carburized layer is in a range from 1.0 µm to 15.0 µm; the components of the base body and the carburized layer both comprise tungsten, carbon, oxygen and M element; the M element is selected from the group consisting of La, Y, Sc, Nd, Sm, Lu, Ce, Gd, Tb, Dy, Ho, Pr, Er, Tm, Yb, Eu, Hf, Zr, or a combination of any two or more thereof; wherein the components of the tungsten carbide alloy filament do not contain thorium element.

In some embodiments, the M element in the carburized layer is in the form of an oxide, and the particle size of the oxide particles of M is in a range from 10nm to 1000nm; and the carbon element in the carburized layer is in the form of a carbide.

In some embodiments, a plurality of second channels are distributed on the carburized layer so that a layered structure stacked in a radial direction is formed on the cross section of the filament; a plurality of first channels are distributed on the carburized layer, and at least part of the first channels are cross-arranged with the second channels, so that the layered structure is divided into a plurality of block structures.

In some embodiments, a plurality of first channels are distributed on the carburized layer; wherein at least part of the first channels are distributed along the radial direction of the cross section of the filament; and/or at least part of the first channels point to the center of a circle of the cross section of the filament; a plurality of second channels are distributed on the carburized layer; at least part of the second channels are distributed along the circumferential direction of the cross section of the tungsten alloy filament; wherein at least part of the second channels are cross-arranged with the first channels.

In some embodiments, the components of the carburized layer comprise W₂C and WC; and a weight ratio of the W₂C to the WC is (60-100): (0-40).

In some embodiments, in the base body, the M element is in the form of an oxide, and the carbon element is in the form of a carbide or a carbon simple substance.

In some embodiments, in the base body comprises the following components: 0.0005 wt% to 0.3 wt% of carbon element, 0.25 wt% to 2.6 wt% of M element, 0.05 wt% to 0.5 wt% of oxygen element, and the balance being the tungsten element and unavoidable impurities.

In some embodiments, in the components of the base body, the M element is in the form of an oxide, and the carbon element is in the form of a carbide or a carbon simple substance; the oxide of M is selected from the group consisting of lanthanum oxide, yttrium oxide, scandium oxide, neodymium oxide, samarium oxide, lutetium oxide, cerium oxide, gadolinium oxide, terbium oxide, dysprosium oxide, holmium oxide, praseodymium oxide, erbium oxide, hafnium oxide, and zirconium oxide, or a combination of any two or more thereof; and the carbide is selected from the group consisting of lanthanum carbide, zirconium carbide, yttrium carbide, hafnium carbide and tungsten carbide, or a combination of any two or more thereof.

In some embodiments, the components of the base body also comprise a metal element T; the T is selected from at least one of K, Re, Mo, Fe, and Co.

In some embodiments, a mass content of Re is less than 1000 ppm.

In some embodiments, the wire diameter of the tungsten carbide alloy filament is 800 µm or less.

In some embodiments, the operating temperature of the tungsten carbide alloy filament is in a range from 1100°C to 1500°C.

In some embodiments, the tungsten carbide alloy filament is a spiral structure with a pitch of 0.800mm to 1.800mm, a length of 10.00mm to 16.00mm, and an outer diameter of 3.00mm to 6.00mm.

In some embodiments, the tungsten carbide alloy filament is a spiral structure, and the thickness of the carburized layer of at least one spiral turn reaches 30 µm to 90 µm.

The present application provides a method for preparing the above-mentioned tungsten carbide alloy filament, and the method comprises the following steps:
S1: doping and powder making: sequentially performing the doping process, the reduction process and the powder making process to obtain a finished powder raw material; wherein the doping process is solid-liquid doping or solid-solid doping;
S2: powder pressing: using isostatic pressing to press the finished powder raw material into a compact, and pre-sintering the compact at a low temperature in a hydrogen atmosphere to obtain a presintered billet;
S3: high temperature sintering: sintering the presintered billet at high temperature by a high temperature sintering method to obtain a sintered billet;
S4: pressure processing: processing the sintered billet into a tungsten alloy wire of a certain diameter; wherein, performing an oxidation annealing treatment during the thinning process;
S5: cleaning: cleaning the tungsten alloy wire into tungsten alloy white wire;
S6: winding: winding the tungsten alloy white wire into a spring-shaped filament structure;
S7: cathode assembly: assembling the spring-shaped filament structure and components, ceramics, and lead components into a cathode structure through heat treatment;
S8: welding: welding the filament structure in the cathode structure to the component end cap; and
S9: carbonization: carbonizing the welded cathode structure.

The present application also provides a heating device comprising the above-mentioned tungsten carbide alloy filament.

In some embodiments, the temperature rise curve of the high temperature sintering step is as follows: heating from room temperature to A1, with the heating time H1 ranging from 5 hours to 8 hours, and A1 ranging from 950°C to 1250°C; keeping warm at A1 for H2 hours, with H2 ranging from 1 hour to 3 hours; heating from A1 to A2, with the heating time H3 ranging from 1.5 hours to 2.5 hours, and A2 ranging from 1300°C to 1500°C; keeping warm at A2 for H4 hours, with H4 ranging from 2.5 hours to 4.5 hours; heating from A2 to A3, with the heating time H5 ranging from 1 hour to 3 hours, and A3 ranging from 1700°C to 1900°C; keeping warm at A3 for H6 hours ranging from 1 hour to 3 hours; heating from A3 to A4, with heating time H7 ranging from 1 hour to 3 hours, and A4 ranging from 2050°C to 2250°C; keeping warm at A4 for H8 hours ranging from 5 hours to 10 hours; cooling naturally from A4 to obtain sintered billets.

In some embodiments, the process of the pressure processing step is as follows: the sintered billet is refined to an intermediate specification wire with a diameter of 1.5mm to 3.5 mm; and then the intermediate specification wire is oxidized and annealed at 1200°C to 1500°C with an annealing speed of 3 m/min to 10 m/min to obtain the tungsten alloy wire.

Based on the above, compared with the prior art, the present application has the following advantages:
The tungsten carbide alloy material of the present application, through the design of the carburized layer and the combination of rare earth element components, enables the stable outward migration of rare earth atoms to replenish the rare earth element evaporated from the surface, thereby improving the emission stability of the material. Without the addition of thorium element, the tungsten carbide alloy material of the present application can also achieve the stable emission capability of traditional thorium-tungsten filaments, address the problem of poor stable emission capability of existing thorium-free tungsten filaments. Moreover, it does not have the radioactive pollution problem associated with traditional thorium-tungsten filaments.

Other features and beneficial effects of the present application will be described in the following description, and partly become apparent from the description, or understood by practicing the present application. The object and other beneficial effects of the present application can be realized and obtained by the structures particularly pointed out in the description, claims and drawings.

### BRIEF DESCRIPTION OF THE DRAWINGS

In order to more clearly describe specific implementations of the present application or technical solutions in the prior art, the accompanying drawings needed by the description in the specific implementations or in the prior art will be briefly introduced below. Apparently, the accompanying drawings in the following description are some implementations of the present application. Those ordinarily skilled in the art may also obtain other accompanying drawings according to these accompanying drawings without making creative work.
FIG. 1 is a schematic diagram of a partial structure of a tungsten alloy filament provided in the present application;
FIG. 2 is a schematic diagram of a cross section structure of a tungsten alloy filament provided in the present application;
FIG. 3 is a schematic diagram of the longitudinal section structure of a tungsten alloy filament provided by the present application;
FIG. 4 is an enlarged view of point A in FIG. 2;
FIG. 5 is a metallographic image of Comparative Example 1 provided in the present application at 44% FC;
FIG. 6 is a metallographic image of Comparative Example 1 provided in the present application at 46% FC;
FIG. 7 is a metallographic image of Comparative Example 1 provided in the present application at 48% FC;
FIG. 8 is a metallographic image of Comparative Example 1 provided in the present application at 50% FC;
FIG. 9 is a metallographic image of Example 1 provided in the present application at 48% FC;
FIG. 10 is a metallographic image of Example 1 provided in the present application at 50% FC;
FIG. 11 is a metallographic image of Example 1 provided in the present application at 52% FC;
FIG. 12 is a schematic diagram of the crystal structure of Comparative Example 1 provided in the present application;
FIG. 13 is a schematic diagram of the crystal structure of Example 1 provided in the present application;
FIG. 14 is a diagram showing the channel distribution of the cross section of Example 1 provided in the present application;
FIG. 15 is a diagram showing the channel distribution in the longitudinal section of Example 1 provided in the present application;
FIG. 16 is a diagram showing the channel distribution of the cross section of Comparative Example 1 provided in the present application;
FIG. 17 is a diagram showing the channel distribution of the cross section of Comparative Example 4 provided in the present application;
FIG. 18 is a diagram showing the channel distribution in the longitudinal section of Comparative Example 4 provided in the present application;
FIG. 19 is a schematic diagram of the overall structure of a tungsten alloy filament provided by the present application;
FIG. 20 is a schematic diagram of a process flow for preparing a heating device from a tungsten alloy wire provided in the present application;
FIG. 21 is a graph showing the conversion relationship between FC% and degrees Celsius;
FIG. 22 is a schematic diagram of a partial structure of a cross section of a tungsten alloy filament provided in the present application.

### Reference sign:

100 base body, 200 carburized layer, 210 channel, 220 outer edge of filament, 211 first channel, 212 second channel.

### DETAILED DESCRIPTION

In order to make the object, technical solutions and advantages of the examples of the present application clearer, the technical solutions in the examples of the present application will be clearly and completely described below in conjunction with the drawings in the examples of the present application. Obviously, the described examples are part of the examples of the present application, rather than all the examples; the technical features designed in different implementation modes of the present application described below can be combined with each other as long as they do not conflict with each other; based on the examples of the present application, all other embodiments obtained by those skilled in the art without making creative work are within the scope of protection of the present application.

In the description of the present application, it should be noted that all terms used in the present application (including technical terms and scientific terms) have the same meanings as those generally understood by those skilled in the art to which the present application belongs, and cannot be understood as limiting the present application; it should be further understood that the terms used in the present application should be understood to have the same meanings as these terms in the context of this specification and in the relevant fields, and should not be understood in an idealized or overly formal sense, unless explicitly defined in the present application.

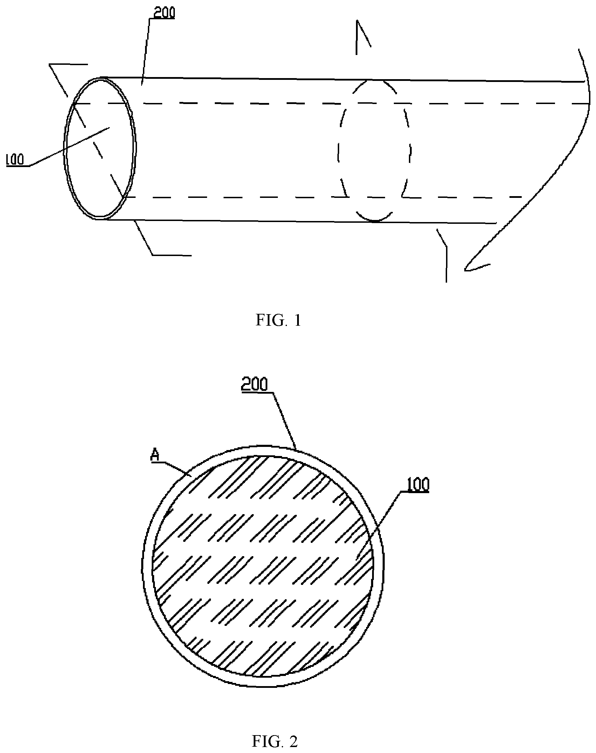

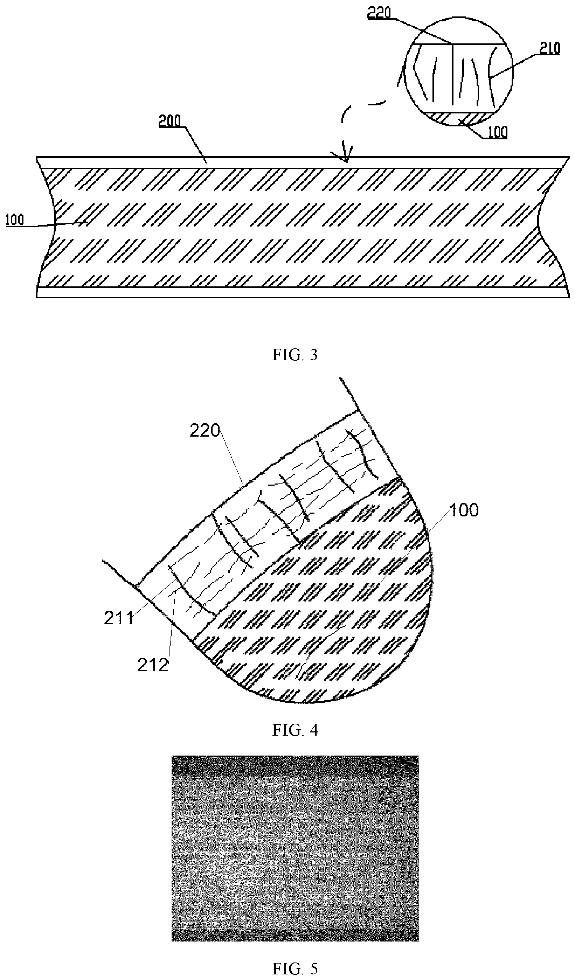

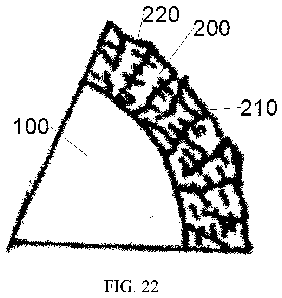

The present application provides a tungsten carbide alloy filament, and the technical solution is as follows:
the tungsten carbide alloy filament comprises a base body and a carburized layer attached to the outer surface of the base body; the grain width of the carburized layer is in a range from 1.0 µm to 15.0 µm; the components of the base body and the carburized layer both comprise tungsten, carbon, oxygen and M element; the M element is selected from the group consisting of La, Y, Sc, Nd, Sm, Lu, Ce, Gd, Tb, Dy, Ho, Pr, Er, Tm, Yb, Eu, Hf, Zr, or a combination of any two or more thereof; wherein the components of the tungsten carbide alloy filament do not contain thorium element.
1. Preferred structural characteristics and phase composition characteristics of the carburized layer 200:
   (1) The M element in the carburized layer is in the form of an oxide, and the carbon element in the carburized layer is in the form of a carbide and the particle size of the oxide particles of M is in a range from 10nm to 1000nm.
   (2) As shown in FIGS. 1-4, a plurality of first channels 211 are distributed on the carburized layer 200; wherein at least part of the first channels 211 are distributed along the radial direction of the cross section of the filament; and/or at least part of the first channels 211 point to the center of a circle of the cross section of the filament.
   (3) As shown in FIG. 4 and FIG. 22, a plurality of channels 210 are distributed on the carburized layer 200, and the channels 210 comprise a first channel 211 and a plurality of second channels 212; wherein at least part of the first channels 211 are distributed along the radial direction of the cross section of the tungsten alloy filament; and/or at least part of the first channels 211 point to the center of a circle of the cross section of the tungsten alloy filament;at least part of the second channels 212 are distributed along the circumferential direction of the cross section of the tungsten alloy filament; wherein at least part of the second channels 212 are cross-arranged with the first channels 211, so that the cross section of the carburized layer 200 is in a layered block.

Specifically, the structure of the carburized layer 200 in the present application is controlled by controlling the grain size of the carburized layer 200 within a certain small range (grain width being in a range from 1.0 µm to 15.0 µm) to form a large number of first channels 211 and second channels 212, thereby forming a layered block structure. In combination with the rare earth components within the tungsten alloy filament, this structure achieves a stable emission effect. The specific mechanism is as follows:
As shown in FIG. 22, the second channel 212 divides the carburized layer 200 into a layered structure stacked in a radial direction, and then divides the carburized layer 200 into a block structure through the first channel 211 designed to cross-arranged with the second channel 212, so that the carburized layer 200 forms a layered block. Compared with other structural distributions, for example, the first channel 211 divides the carburized layer 200 into a block structure, the second channel 212 divides the carburized layer 200 into a radially stacked layered structure, the second channel 212 and the first channel 211 are not designed to cross-arranged, and the carburized layer 200 forms two clearly divided areas, one area is a block structure, and the other area is a layered structure; the grain control of the carburized layer 200 of the present application makes its cross section a layered block design, which has the advantages of: the radial or quasi-vertical distribution design of the first channel 211 is conducive to the outward migration of rare earth atoms of the M element, and the layered structure in the carburized layer 200 separated by the second channel 212 is where the oxides of M are distributed. The second channel 212 is combined with the first channel 211 (vertical channel 210), causing the carburized layer 200 to form a layered block, which can effectively control the migration speed of the oxides of M to the filament surface (i.e., the outer surface of the carburized layer 200), thereby improving the stable emission ability of the tungsten carbide alloy.

It should be noted that:
As shown in the filament structure of FIG. 1, the cross section of the filament of FIG. 2, and the longitudinal section of the filament of FIG. 3, for the "radial distribution along the cross section of the filament", "at least part of the first channel 211 points to the center of a circle of the cross section of the filament", the radial distribution mode and the mode pointing towards the center of a circle mean that the end point of the first channel 211 close to the base body 100 and the end point close to the edge of the filament are connected to form a first straight line, and the angle between the first straight line and the tangent line at the intersection of the outer edge 220 of the filament is (60-90)°.

As shown in FIG. 22, for the "distributed along the circumferential direction of the cross section of the tungsten alloy filament" herein, the circumferential distribution means connecting the end points of the second channel 212 into a second straight line, and the angle between the second straight line and the straight line where the filament radial direction is located is (-45 to +45)°.

In the present application, the first channel 211 and the outer edge 220 of the filament (i.e., the outer edge of the carburized layer 200) are quasi-vertically and quasi-radially distributed. The radial or quasi-vertical distribution design of the first channel 211 is beneficial to the outward migration of M element atoms, but it does not mean that the first channel 211 is a straight line structure, nor does it mean that the two end points of the first channel 211 need to pass through to the outer edge of the base body 100 (i.e., the outer edge 220 of the filament) and the carburized layer 200.

In the present application, the second channel 212 is distributed along the circumferential direction or is cross-arranged with the first channel 211, which does not mean that the second channel 212 is a standard arc structure, and does not mean that the second channel 212 is continuously connected to run through the entire outer ring. It can be a quasi-annular distribution composed of multiple sections of second channels 212 separated from each other, or a cross-distribution of multiple sections of second channels 212 separated from each other and the first channel 211, so that the carburized layer 200 is divided into a layered structure stacked along the radial direction.
(3) The tungsten carbide alloy filament is a spiral structure, and the thickness of the carburized layer of at least one spiral turn reaches 30 µm to 90 µm, preferably 35 to 45 µm, 50 to 90 µm, for example 60 µm, 70 µm, 80 µm.
(4) The components of the carburized layer 200 comprise W₂C and WC; and a weight ratio of the W₂C to the WC is (60-100): (0-40).

### 2. Preferred component characteristics for tungsten carbide alloy filament:

(1) In the base body, the M element is in the form of an oxide, and the carbon element is in the form of a carbide or a carbon simple substance.
   In the present application,one or more oxides of M and carbides or carbon simple substance are added. Since the oxides of M and carbides in the tungsten base body react at high temperatures, for example, lanthanum oxide reacts with tungsten carbide to generate lanthanum atoms, and the size of the generated lanthanum atoms is much smaller than that of lanthanum oxide particles, the migration and diffusion speed of lanthanum atoms in the tungsten base body will be very fast, thereby increasing the diffusion speed of M metal atoms. In summary, the present application combines the oxides of M with carbides or carbon simple substance and can achieve the same or even higher electron emission capability as thorium-tungsten filaments at a lower operating voltage (excitation temperature), compared with thorium-tungsten filaments, and it is easier to ensure the balance between the loss and migration of rare earth atoms in the carburized layer of the filament, thereby ensuring the stability of the electron emission of the filament.
(2) The base body of the tungsten carbide alloy filament comprises the following components: 0.0005 wt% to 0.3 wt% of carbon element, 0.256 wt% to 2.6 wt% of M element, 0.05 wt% to 0.5 wt% of oxygen element, and the balance being tungsten element and inevitable impurities. Preferably, the base body of the tungsten carbide alloy filament consists of the following components: 0.0005 wt% to 0.3 wt% of carbon element, 0.25wt% to 2.6 wt% of M element, 0.05 wt% to 0.5 wt% oxygen element, and the balance being tungsten element and inevitable impurities.

The M element can be 1.28 wt% to 2.6 wt%, and the tungsten alloy filament made of the tungsten alloy material with this composition ratio is better for use in microwave ovens <800W. The M element can be 0.25 wt% to 1.28 wt%, and the tungsten alloy filament made of the tungsten alloy material with this composition ratio is better for use in microwave ovens >800W. Furthermore, the M element can be 0.25 wt% to 0.86 wt%, and the tungsten alloy filament made of the tungsten alloy material with this composition ratio is better for use in microwave ovens >1000W.

Preferably, M is in the tungsten alloy material in the form of an oxide, and the oxide of M is selected from the group consisting of lanthanum oxide, yttrium oxide, scandium oxide, neodymium oxide, samarium oxide, lutetium oxide, cerium oxide, gadolinium oxide, terbium oxide, dysprosium oxide, holmium oxide, praseodymium oxide, erbium oxide, hafnium oxide, and zirconium oxide, or a combination of any two or more thereof; carbon element is in the tungsten alloy material in the form of carbide or carbon simple substance, and the carbide is selected from the group consisting of lanthanum carbide, zirconium carbide, yttrium carbide, hafnium carbide and tungsten carbide, or a combination of any two or more thereof. For example, the oxide of M can be selected from lanthanum oxide, or a combination of lanthanum oxide and yttrium oxide, or a combination of lanthanum oxide and zirconium oxide, or a combination of lanthanum oxide and scandium oxide, or a combination of lanthanum oxide and hafnium oxide and so on.

Preferably, the base body of the tungsten alloy material further comprises T, where T is a solid solution metal element or a dispersed metal element, and T is selected from at least one of K, Re, Mo, Fe, and Co. Further preferably, the mass content of Re is less than 1000 ppm.

It should be noted that:
"La, Y, Sc, Nd, Sm, Lu, Ce, Gd, Tb, Dy, Ho, Pr, Er, Tm, Yb, Eu, Hf, Zr" in the text are element symbols in the periodic table, representing the metal elements lanthanum, yttrium, scandium, neodymium, samarium, lutetium, cerium, gadolinium, terbium, dysprosium, holmium, praseodymium, erbium, thulium, ytterbium, europium, hafnium and zirconium in the periodic table respectively; "K, Re, Mo, Fe, Co" in the text are element symbols in the periodic table, representing the metal elements potassium, rhenium, molybdenum, iron and cobalt in the periodic table respectively; W is the symbol of tungsten in the periodic table; C is the symbol of carbon in the periodic table; in addition, "M" and "T" are only reference symbols and do not represent elements in the periodic table and are only used for reference.

3. The wire diameter of tungsten carbide alloy filament can reach 800 µm or less:
In the pressure processing process, the tungsten alloy material provided by the present application has good processing performance and can be processed into wires with fine wire diameter specifications (i.e., fine wire diameter tungsten alloy wires), and the wire diameter tolerance can be controlled within a very small range.

Furthermore, the wire diameter can be 600 µm or less, 550 µm or less, or even 500 µm or less. The wire diameter can be 450 µm to 550 µm, such as 470 µm, 490 µm, 500 µm, 520 µm, and so on, or 700 µm to 800 µm, such as 750 µm, 760 µm, 780 µm, and so on.

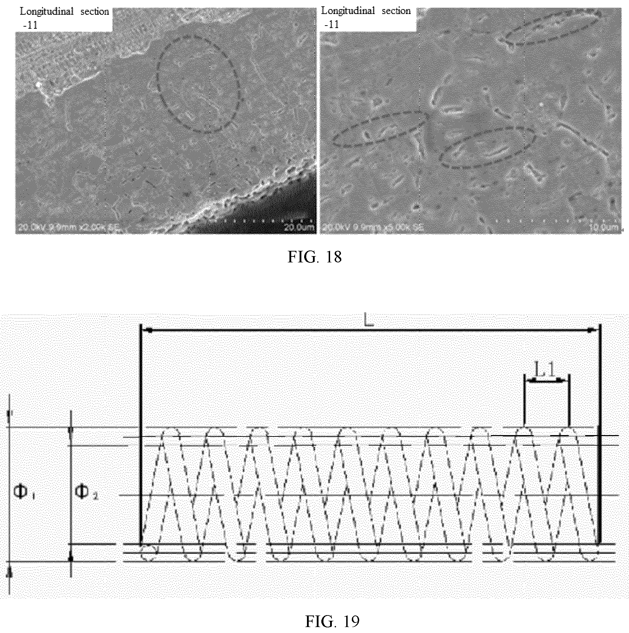

4. The tungsten carbide alloy filament has a spiral structure during actual use. The preferred structural characteristics of the spiral structure of the tungsten alloy filament are as follows:
4.1 Number of turns control: As shown in the structural schematic diagram of structure of the tungsten alloy filament in FIG. 19, the number of turns of the filament is preferably (9.5 to 13) turns, the control tolerance is ±0.125, and the statistical CPK>1.33.

The number of turns of the filament is 9.50 to 13.00 turns. The preferred number of turns may be 9.70 to 10.70 turns, such as 9.90 turns, 10.00 turns, 10.28 turns, 10.5 turns, and so on; it may also be between 10.70 and 11.70 turns, such as 11.00 turns, 11.20 turns, 11.5 turns, and so on; it may also be 11.80 to 13.00 turns, such as 12.00 turns, 12.20 turns, 12.5 turns, and so on.

4.2 Pitch uniformity control: the tolerance of the tungsten alloy filament pitch L₁ is ±0.02, and the statistical CPK>1.33; wherein, the tungsten alloy filament pitch L₁ is shown in FIG. 19, which represents the distance between two adjacent spiral turns. In the implementation process, those skilled in the art can use a dedicated wire winding device to make the filament pitch uniform so that the heating device can emit electrons more stably.

It should be noted that the number of filament turns is related to the filament length L and the pitch L₁, and the filament length L = (number of filament turns-1)*L₁ .

4.3 Pitch size, the pitch L₁ of the tungsten alloy filament is 0.800 mm to 1.800 mm, and the preferred pitch L₁ can be 1.000 mm to 1.150 mm, such as 1.018 mm, 1.044 mm, 1.135 mm, and so on, or 1.230 mm to 1.330 mm, such as 1.240 mm, 1.290 mm, and so on, or 1.400 mm to 1.600 mm, such as 1.470 mm, 1.500 mm, and so on;

3.4 Filament length: the length L of the filament is 10.00 mm to 16.00 mm, and the preferred length L can be 10.50 mm to 12.00 mm, such as 11.00 mm, 11.20 mm, 11.70 mm, and so on, or can be 12.50 mm to 14.00 mm, such as 12.83 mm, 13.40 mm, 13.55 mm, and so on;

The outer diameter Φ₁ of the filament is 3.00 mm to 6.00 mm, and the preferred outer diameter Φ1 can be 3.50 mm to 4.50 mm, such as 3.70 mm, 3.80 mm, 3.90 mm, 3.92 mm, 4.00 mm, and so on, or 5.00 mm to 6.00 mm, such as 5.20 mm, 5.48 mm, 5.60 mm, and so on.

The present application also provides the following preferred embodiments for preparing tungsten alloy wire (finished product before carbonization, steps 1-6), carbide tungsten alloy filament (steps 1-9), and preparing a heating device containing tungsten alloy filament (steps 1-12):
It includes the following steps:
Step 1: doping and powder making: sequentially performing the doping process, the reduction process and the powder making process to obtain a finished powder raw material; wherein the doping process is solid-liquid doping or solid-solid doping;
Step 2: powder pressing: using isostatic pressing to press the finished powder raw material into a compact, and pre-sintering the compact at a low temperature in a hydrogen atmosphere, increasing the compact strength; wherein the powders are pressed into compacts with a unit weight of 1.5 kg to 5.0 kg at a pressure of 160 MPa to 240 MPa;
Step 3: high temperature sintering: adopting high temperature sintering method to obtain a sintered billet with a density of 17.5 g/cm³ to 18.3 g/cm³, that is, to obtain the billet-shaped tungsten alloy material;
   the temperature rise curve of the high temperature sintering step is as follows:
   heating from room temperature to A1, with the heating time H1 ranging from 5 hours to 8 hours, and A1 ranging from 950°C to 1250°C;
   for example, H1 is 5 hours to 7 hours, 7 hours to 8 hours, and so on, and another example is 6 hours, 7.5 hours, and so on; A1 is 950°C to 1050°C, 1050°C to 1250°C, and so on, and another example is 1000 °C, 1100 °C, and so on;
   keeping warm at A1 for H2 hours, with H2 ranging from 1 hour to 3 hours;
   for example, H2 is 1 hour to 2 hours, 2 hours to 3 hours, and so on, and another example is 1.5 hours, 2.5 hours, and so on;
   heating from A1 to A2, with the heating time H3 ranging from 1.5 hours to 2.5 hours, A2 ranging from 1300°C to 1500°C;
   for example, H3 is 1.5 hours to 2.0 hours, 2.0 hours to 2.5 hours, and so on, and another example is 1.5 hours, 2.0 hours, 2.4 hours, and so on; A2 is 1300°C to 1400°C, 1400°C to 1500°C, and so on, and another example is 1350°C, 1500°C, and so on;
   keeping warm at A2 for H4 hours, with H4 ranging from 2.5 hours to 4.5 hours;
   for example, H4 is 2.5 hours to 3.0 hours, 3.0 hours to 4.0 hours, and so on, and another example is 2.8 hours, 3.5 hours, and so on;
   heating from A2 to A3, with the heating time H5 ranging from 1 hour to 3 hours, and A3 ranging from 1700°C to 1900°C;
   for example, H5 is 1 hour to 2 hours, 2 hours to 3 hours, and so on, and another example is 1.6 hours, 2.0 hours, 2.5 hours, and so on; A3 is 1700°C to 1800°C, 1800°C to 1900°C, and so on, and another example is 1750°C, 1850°C, and so on;
   keeping warm at A3 for H6 hours ranging from 1 hour to 3 hours;
   for example, H6 is 1 hour to 2 hours, 2 hours to 3 hours, and so on, and another example is 1.5 hours, 2.5 hours, and so on;
   heating from A3 to A4, with heating time H7 ranging from 1 hour to 3 hours, and A4 ranging from 2050°C to 2250°C;
   for example, H7 is 1 hour to 2 hours, 2 hours to 3 hours, and so on, and another example is 1.5 hours, 2.5 hours, and so on; A4 is 2050°C to 2150°C, 2150°C to 2250°C, and so on, and another example is 2100°C, 2200°C, and so on;
   keeping warm at A4 for H8 hours ranging from 5 hours to 10 hours;
   for example, H8 is 5 hours to 7 hours, 7 hours to 10 hours, and so on, and another example is 6 hours, 8 hours, and so on;
   cooling naturally from A4 to obtain sintered billets;
Step 4: pressure processing:
   4.1 in the pressure processing step, the tungsten alloy sintered billet obtained after sintering is refined to an intermediate specification wire with a diameter of 1.5 mm to 3.5 mm;
   4.2 then, the intermediate specification wire is oxidized and annealed at 1200°C to 1500°C with an annealing speed of 3 m/min to 10 m/min;
   for example, the annealing speed is 3 m/min to 7 m/min, 7 m/min to 10 m/min, and so on, and another example is 3 m/min, 5 m/min, 7 m/min, and so on; the oxidation annealing is performed at 1200°C to 1350°C, 1350°C to 1500°C, and so on , and another example is 1250°C, 1400°C, and so on;
   4.3 After oxidation annealing, the intermediate specification wire is continued to be processed to the required wire diameter specification to obtain tungsten alloy wire;
   wherein multiple passes of rotary forging and drawing are used for diameter reduction processing; the oxidation annealing process is performed in the oxidation annealing equipment, and the annealing speed refers to the speed at which the wire passes through the annealing tank, which means the length of the wire passing through the annealing tank per unit time.
Step 5: white wire cleaning: using electrolytic cleaning to clean the black wire into tungsten alloy white wire that can be processed into microwave oven heating device filament;
Step 6: winding: winding the white wire into a spring-shaped filament structure for the heating device to obtain tungsten alloy wire;
Step 7: cathode assembly: assembling the spring-shaped filament structure and components, ceramics, lead components and other parts into a cathode structure through heat treatment;
Step 8: welding: welding the filament structure in the cathode structure to the component end cap; and
Step 9: carbonization: carbonizing the welded cathode structure to obtain a tungsten carbide alloy filament;
Step 10: white ball assembly: assembling the cathode structure, anode cylinder, antenna end cap and other components together;
Step 11: exhausting the white ball, evacuating the air, and performing high temperature aging to complete the manufacture of the black ball and activate the emission performance;
Step 12: assembling the black ball, heat sink, magnet, tube shell, and so on to finally obtain a heating device component containing the above-mentioned tungsten carbide alloy filament, and putting it into a microwave oven for use.
   1. The preferred structural characteristics of the tungsten alloy wire before carburization (i.e. the wire obtained after pressure processing) are as follows:
      1.1 Characteristics of the initial recrystallization temperature:
      The initial recrystallization temperature of the tungsten alloy wire provided by the present application is higher than that of the thoriated tungsten wire, which is 48%Fc to 56%Fc in the present application, while the thoriated tungsten wire is around 46%FC (2020°C).

The average size of 80%Fc recrystallized grains of the tungsten alloy wire provided by the present application is finer than that of the thoriated tungsten wire. The average size of 80%Fc recrystallized grains of the tungsten alloy wire provided by the present application is in a range from 1 µm to 15 µm, and the average size of 80%Fc recrystallized grains of the thoriated tungsten filament is in a range from 16 µm to 150 µm.

The above characteristics of high initial recrystallization temperature and small average size of 80% Fc recrystallized grains make the tungsten base body structure of the filament produced by the tungsten alloy wire of the present application finer than that of the thorium tungsten filament after carburization in the magnetron, thereby making the grain width of the carburized layer of the tungsten alloy filament finer after carburization, so that the grain width of the carburized layer is controlled within the required range;
There is a carbonization process in the process of preparing tungsten alloy wire into tungsten carbide alloy. The carbonization temperature is in a range from 2000°C to 2500°C. The original thoriated tungsten filament is carbonized at this temperature (the reason is that its initial recrystallization temperature is too low after analysis). The grain structure will show recrystallization phenomenon, and the grains are coarse, which makes the filament brittle and poor in seismic resistance after carbonization. It is very easy to break the wire during the assembly, production, transportation and subsequent use of the magnetron microwave oven. Compared with the thoriated tungsten filament, the initial recrystallization temperature of the filament material selected in the present application is higher than that of the original thoriated tungsten filament, and the average size of 80% Fc recrystallized grains is smaller than that of the original thoriated tungsten filament. After the tungsten alloy wire of the present application is carbonized, the filament structure is still fine-grained, and the brittleness is less than that of the traditional thoriated tungsten filament material. The tungsten alloy filament with fine grain structure has better seismic resistance than the thoriated tungsten filament. The filament breaking rate of the magnetron produced by the present application is much lower than that of the magnetron produced by traditional thoriated tungsten.

Optionally, the initial recrystallization temperature of the tungsten alloy wire may be 48%FC to 52% FC, such as 48% FC, 50% FC, 52% FC, and so on.

Optionally, the average size of 80%Fc recrystallized grains of the tungsten alloy wire can be 1 µm to 8 µm, 8 µm to 12 µm, 12 µm to 15 µm, and so on, such as 4.0 µm, 8.5 µm, 13 µm, and so on.

1.2 For the average size characteristics of the oxide particles in the tungsten alloy wire: The average size of the oxide particles in the tungsten alloy wire is in a range from 100 nm to 500 nm
The average size of the oxide particles of the tungsten alloy wire of the present application is in a range from 100 nm to 500 nm. The size of the oxide particles of the tungsten alloy wire determines the size of the oxide particles of the filament after carburization. If the oxide particles of the wire are too coarse relative to the range specified in the present application, resulting in coarse particles of the tungsten alloy filament after carburization, then during the use of the magnetron, it will be more difficult for the oxide particles of M to migrate to the surface of the filament, which will make it easier for the balance of rare earth element loss and replenishment on the surface of the filament to be broken, and the electron emission of the magnetron will be more unstable.

Optionally, the average size of the oxide particles may also be 100 nm to 300 nm, 300 nm to 500 nm, and so on, such as 200 nm, 300 nm, 450 nm, and so on.

1.3 For the number of flaw detection crack points characteristics of the tungsten alloy wire:
The number of flaw detection crack points of the above tungsten alloy wire is less than 5 (per 100 meters). Further, the number of flaw detection crack points of the tungsten alloy wire can be less than 2 per 100 meters, such as 0 per 100 meters, 0.5 per 100 meters, 1 per 100 meters, and so on.

Tungsten alloy wire has fewer flaw detection crack points, higher filament yield rate, and is less likely to break.

2. Important control points for the preferred embodiments of the method for preparing tungsten alloy wire before carburization:
The present application can obtain the above-mentioned tungsten alloy wire before carbide with the above-mentioned starting recrystallization temperature and average size characteristics of oxide particles through the preferred implementation scheme of the above-mentioned preparation method. Through the carbonization treatment of the tungsten alloy wire, a tungsten carbide alloy filament with the above-mentioned carburized layer grain width, carburized layer oxide particle size and other characteristics can be obtained. The specific process control points of the preparation method for obtaining the tungsten alloy wire before carbide are as follows:
(1) Oxidation annealing treatment of intermediate specification products:
   The present application provides a specific treatment method for oxidation annealing in the above-mentioned pressure processing step, so that the initial recrystallization temperature of the tungsten alloy is controlled within the above-mentioned required range (48%Fc to 56%Fc): a stress relief oxidation annealing at a temperature of 1200°C to 1500°C is added at the middle specification of the wire of 1.5mm to 3.5mm, so that the initial recrystallization temperature of the tungsten alloy wire is effectively controlled within 48%Fc to 56%Fc; in this preparation process, if the oxidation annealing process is removed, the initial recrystallization temperature of the tungsten alloy wire exceeds 56%Fc, and the excessively high initial recrystallization temperature will be detrimental to the electron emission performance of the tungsten carbide alloy filament under the working conditions of the magnetron.
(2) By controlling the time of heating from A1 to A2 and the sintering time at A2 (1300°C to 1500°C) during the sintering process:
   In the high temperature sintering stage of the tungsten compact, the present application provides a sintering process, which controls the time of heating from A1 to A2 and the sintering time at A2 (1300°C to 1500°C) in the sintering process, so that the sintering neck of the tungsten compact grows rapidly, closes the holes, and prevents the oxide particles in the holes from being squeezed into another hole from the unclosed connecting channel during the shrinkage of the sintering cavity of the billet, thereby ensuring the density of the sintered billet and controlling the size of the oxide particles of the sintered billet, thereby controlling the oxide size of the tungsten alloy wire or the filament after carbonization;

Among them, the oxide particle size distribution range of the tungsten alloy sintered billet obtained by the above sintering process is 100nm to 2000nm, and the average size of the oxide particles is 600nm to 1000nm, and the average size of the oxide particles of the tungsten alloy wire is 100nm to 500nm; optionally, the average size of the oxide particles can also be 100nm to 300nm, 300nm to 500nm, and so on, such as 200nm, 300nm, 450nm, and so on.

Without the above sintering process, the oxide particle size distribution range of the sintered tungsten alloy billet is 400nm to 5000nm, and the average size of the oxide particles is 1200nm to 2000nm. The average size of the oxide particles of the further refined tungsten alloy wire is also relatively coarse (about 500nm to 900nm).

The mechanism of the sintering process affecting the oxide size of the billet, tungsten alloy wire, and carbonized filament, as well as the effect of the oxide size of the tungsten alloy wire and carbonized filament on the performance of the filament is as follows: the reason why the oxide particle size is controlled within a smaller range is that the oxide particle size of the billet directly determines the oxide size of the tungsten alloy wire or carbonized filament. If the oxide particles of the wire are coarser, it will be more difficult for the particles to migrate to the surface of the filament during the use of the magnetron, which will make it easier to break the balance between the loss and replenishment of rare earth elements on the surface of the filament, making the magnetron electron emission more unstable.

The adjustment of sintering process affects the speed of sintering neck growth and pore closure of tungsten billet. The sintering process provided can reduce the possibility of oxide particle aggregation, thereby reducing the oxide particle size of sintered billet. The specific principle of high temperature sintering process is explained as follows:
The isostatic pressing compact is a dense accumulation of powders with a porosity of about 35% to 45%. We can simply imagine these pores as holes with multiple channels connected, and the oxide particles are evenly distributed on the inner surface of the holes. During the high temperature sintering process, the tungsten particles bonded together form a "sintering neck". As the sintering temperature increases, the sintering neck continues to grow and blocks the channels connecting the holes, which produces isolated holes. These isolated holes will gradually become round, making the inner surface area of the hole smaller, and then causing the originally similar small oxide particles to gather together to form larger oxide particles. As the high temperature sintering proceeds, the holes shrink further through diffusion, and the oxide particles distributed on the inner surface of the holes can only further gather to form one or several larger oxide particles.

Some of the smaller holes merge with adjacent large holes due to diffusion, or shrink before the connecting hole channels are closed. The oxide particles in these small holes will be pushed to the adjacent unclosed holes, making the unclosed holes contain more oxide than other places, which in turn causes the oxide particles to be larger than other places.

The present application also provides the following examples and comparative examples:
The weight formula of the raw material components and the element ratio of the prepared filament material according to the examples and comparative examples provided in the present application are shown in Table 1 below:

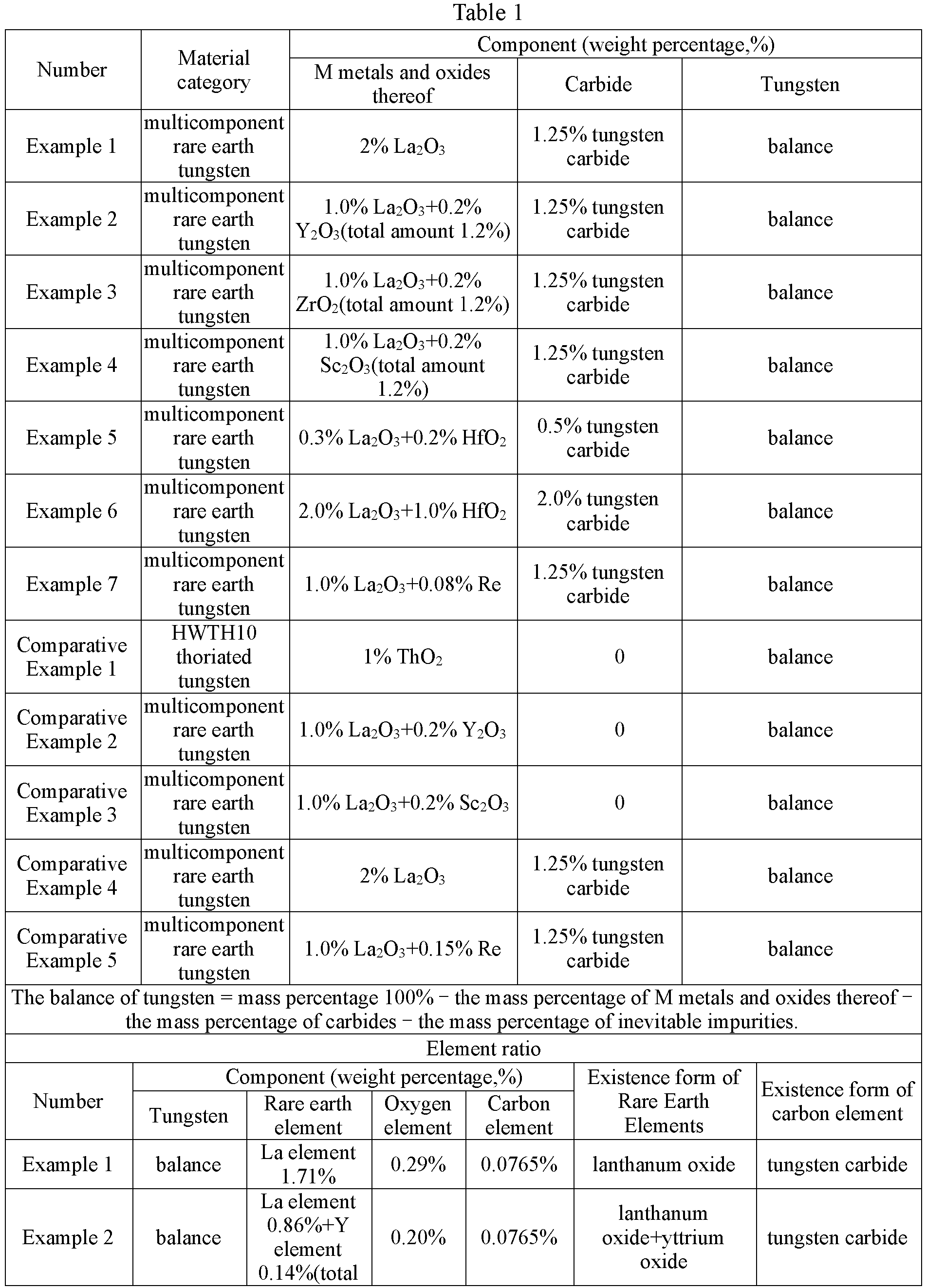

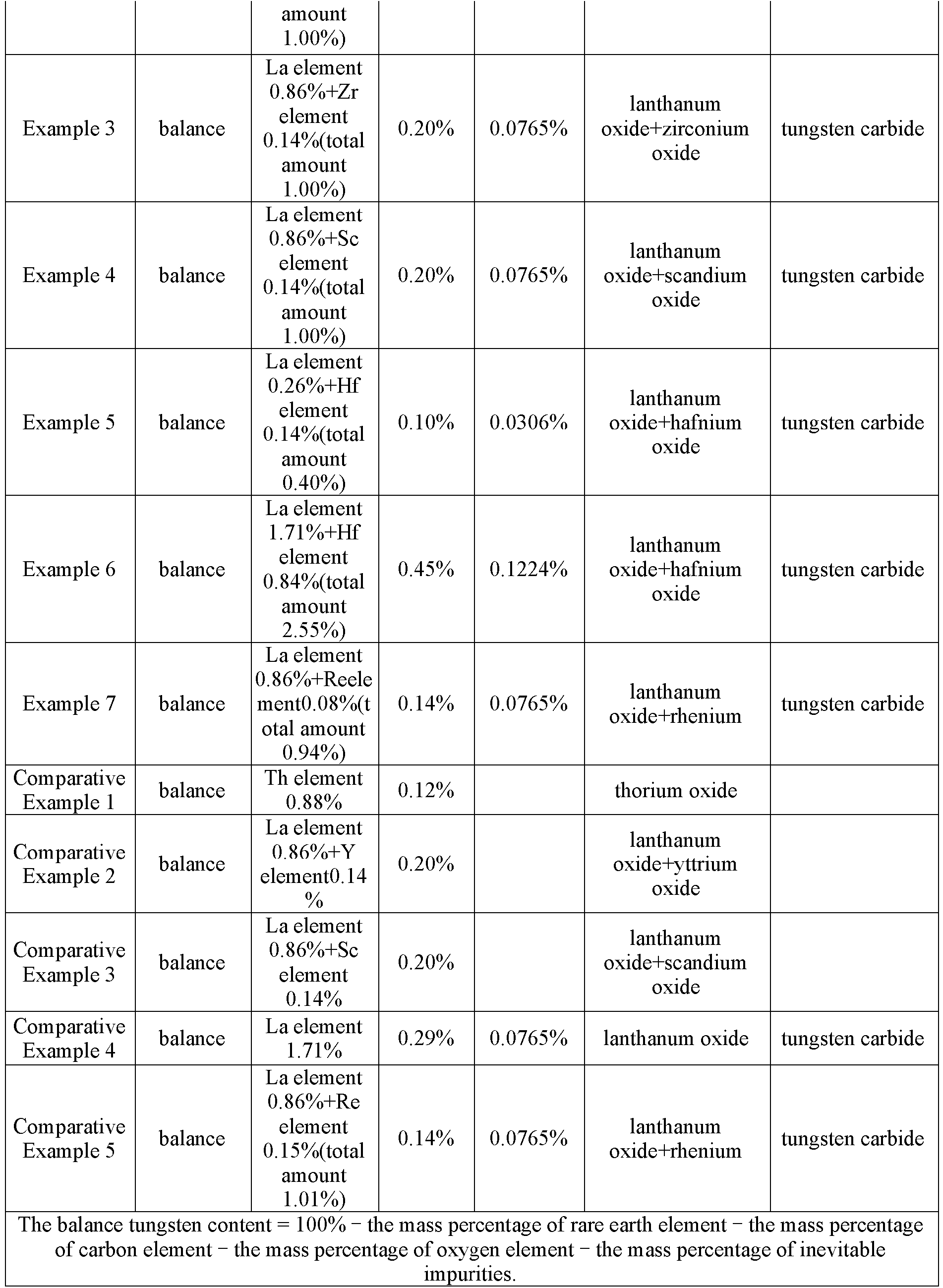

Specifically, according to the formula in Table 1, the raw material components in the examples and the comparative examples are prepared according to the following preparation method to prepare a tungsten alloy filament and a heating device:

### Example 1

1. According to the formula in Table 1, 5L of deionized water was added to a certain amount of lanthanum nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate solution to ammonia NH₃•H₂O solution was 5: 1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum doped powder with uniform doping and low impurity content was obtained;
4. The tungsten-lanthanum doped powder was first reduced to tungsten-lanthanum powder of appropriate particle size in reduction furnaces with temperatures of 650°C, 750°C, 850°C and 900°C in the four temperature zones.
5. The obtained tungsten-lanthanum powder and tungsten carbide were loaded into a high-speed powder mixer for solid-solid powder mixing for 2 hours, and then sieved to obtain mixed tungsten-lanthanum alloy powder;
6. The powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. The high temperature sintering method was adopted, and the intermediate holding point used the method of rapid temperature rise and extended holding time. The sintering temperature curve was as follows:
   heating from room temperature to A1, wherein the heating time H1 was 6 hours, A1 was 1100°C; keeping warm at A1 for H2 hours, wherein H2 was 2 hours; heating from A1 to A2, wherein the heating time was H3, H3 was 2 hours, A2 was 1400°C; keeping warm at A2 for H4 hours, wherein H4 was 3.5 hours; heating from A2 to A3, wherein the heating time was H5, H5 was 2 hours, A3 was 1800°C; keeping warm at A3 for H6 hours, wherein H6 was 2 hours; heating from A3 to A4, wherein the heating time was H7, H7 was 2 hours, A4 was 2100°C; keeping warm at A4 for H8 hours, wherein H8 was 6 hours; and cooling naturally from A4 to obtain the tungsten alloy sintered billet. The pore closing and shrinking speed of the billet was controlled by controlling the medium frequency sintering time, thereby obtaining a sintered billet with an oxide particle size of <2.0 µm and a density of 18.0 g/cm³.
8. Multiple rotary forging and drawing processes were used to process the 17mm diameter sintered billet into 2.0mm specification wire, and then oxidation annealing was performed on the oxidation annealing equipment, with the annealing conditions as follows: temperature 1400°C, annealing speed 5m/min; after annealing, the wire was continued to process into 0.52mm±0.005mm diameter rare earth tungsten alloy black wire;
   The multi-pass rotary forging and drawing processing adopts conventional drawing process, and the process parameters are multi-pass rotary forging to a wire diameter specification of 3.7mm, then drawing to 2.0mm, and then further processing to 0.52±0.005mm tungsten lanthanum alloy black wire after annealing.
9. The 0.52mm black filament was cleaned by electrolytic cleaning into 0.50mm ±0.005mm tungsten lanthanum alloy white filament, which could be processed into the filament of microwave oven heating device.
10. The 0.50mm tungsten-lanthanum alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Example 2

1. According to the formula in Table 1, 5L of deionized water was added to a certain amount of lanthanum nitrate-yttrium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate-yttrium nitrate solution to ammonia NH₃•H₂O solution was 5: 1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum-yttrium doped powder with uniform doping and low impurity content was obtained;
4. The tungsten-lanthanum-yttrium doped powder was first reduced to tungsten-lanthanum-yttrium powder of appropriate particle size in reduction furnaces with temperatures of 650°C, 750°C, 850°C and 900°C in the four temperature zones.
5. The obtained tungsten-lanthanum-yttrium powder and tungsten carbide were loaded into a high-speed powder mixer for solid-solid powder mixing for 2 hours, and then sieved to obtain mixed tungsten-lanthanum-yttrium alloy powder;
6. The powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. The high temperature sintering method was adopted, and the intermediate holding point used the method of rapid temperature rise and extended holding time. The sintering temperature curve was as follows:
   heating from room temperature to A1, wherein the heating time H1 waswas 5 hours, A1 was 950°C; keeping warm at A1 for H2 hours, wherein H2 was 3 hours; heating from A1 to A2, wherein the heating time was H3, H3 was 1.5 hours, A2 was 1300°C; keeping warm at A2 for H4 hours, wherein H4 was 4.5 hours; heating from A2 to A3, the heating time was H5, H5 was 1 hour, A3 was 1700°C; keeping warm at A3 for H6 hours, wherein H6 was 3 hours; heating from A3 to A4, wherein the heating time was H7, H7 was 1 hour, A4 was 2050°C; keeping warm at A4 for H8 hours, wherein H8 was 10 hours; cooling naturally from A4 to obtain the tungsten alloy sintered billet.
8. Multiple rotary forging and drawing processes were used to process the 17mm diameter sintered billet into 2.0mm specification wire, and then oxidation annealing was performed on the oxidation annealing equipment, with the annealing conditions as follows: temperature 1200°C, annealing speed 3m/min; after annealing, the wire was continued to process into 0.52mm±0.005mm diameter tungsten-lanthanum-yttrium alloy black wire; other conditions were consistent with Example 1.
9. The 0.52mm black filament was cleaned by electrolytic cleaning into 0.50mm ±0.005mm tungsten-lanthanum-yttrium alloy white filament, which could be processed into the filament of microwave oven heating device.
10. The 0.50mm tungsten-lanthanum-yttrium alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Example 3

1. According to the formula in Table 1, 5L of deionized water was added to a certain amount of lanthanum nitrate-zirconium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate-zirconium nitrate solution to ammonia NH₃•H₂O solution was 5:1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum-zirconium doped powder with uniform doping and low impurity content was obtained;
4. The tungsten-lanthanum doped powder was first reduced to tungsten-lanthanum-zirconium powder of appropriate particle size in reduction furnaces with temperatures of 650°C, 750°C, 850°C and 900°C in the four temperature zones.
5. The obtained tungsten-lanthanum-zirconium powder and tungsten carbide were loaded into a high-speed powder mixer for solid-solid powder mixing for 2 hours, and sieved to obtain mixed tungsten-lanthanum alloy powder;
6. The powder with a particle size of 1.5 µm was pressed into a compact with a single weight of 3.0 kg at a pressure of 180 MPa by wasostatic pressing, and the compact was pre-sintered at a low temperature in a hydrogen atmosphere to increase the strength of the compact;
7. The high temperature sintering method was adopted, and the intermediate holding point used the method of rapid temperature rise and extended holding time. The sintering temperature curve was as follows:
   heating from room temperature to A1, wherein the heating time H1 was 8 hours, A1 was 1250°C; keeping warm at A1 for H2 hours, wherein H2 was 1 hour; heating from A1 to A2, wherein the heating time was H3, H3 was 2.5 hours, A2 was 1400°C; keeping warm at A2 for H4 hours, wherein H4 was 2.5 hours; heating from A2 to A3, wherein the heating time was H5, H5 was 3 hours, A3 was 1900°C; keeping warm at A3 for H6 hours, wherein H6 was 1 hour; heating from A3 to A4, wherein the heating time was H7, H7 was 3 hours, A4 was 2250°C; keeping warm at A4 for H8 hours, wherein H8 was 5 hours; cooling naturally from A4 to obtain the tungsten alloy sintered billet.
8. Multiple rotary forging and drawing processes were used to process the 17mm diameter sintered billet into 2.0mm specification wire, and then oxidation annealing was performed on the oxidation annealing equipment, with the annealing conditions as follows: temperature 1500°C, annealing speed 10m/min; after annealing, the wire was continued to process into 0.52mm±0.005mm diameter tungsten-lanthanum-zirconium alloy black wire; other conditions were consistent with Example 1.
9. The 0.52mm black filament was cleaned by electrolytic cleaning into 0.50mm ±0.005mm tungsten-lanthanum-zirconium alloy white filament, which could be processed into the filament of microwave oven heating device, other conditions were consistent with Example 1.
10. The 0.50mm tungsten-lanthanum-zirconium alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Example 4

1. According to the formula in Table 1, 5L of deionized water was added to a certain amount of lanthanum nitrate-scandium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate-scandium nitrate solution to ammonia NH₃•H₂O solution was 5: 1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum-scandium doped powder with uniform doping and low impurity content was obtained;
4. The tungsten-lanthanum-scandium doped powder was first reduced to tungsten-lanthanum-scandium powder of appropriate particle size in reduction furnaces with temperatures of 650°C, 750°C, 850°C and 900°C in the four temperature zones.
5. The obtained tungsten-lanthanum-scandium powder and tungsten carbide were loaded into a high-speed powder mixer for solid-solid powder mixing for 2 hours, and then sieved to obtain mixed tungsten-lanthanum-scandium alloy powder;
6. The powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. Sintered billets with oxide particle size <2.0 µm and density 18.0 g/cm were obtained by high temperature sintering. Wherein, the process and conditions of this step were consistent with those of Example 1;
8. Multiple rotary forging and drawing processes were used to process the 17mm diameter sintered billet into 0.52mm±0.005mm diameter tungsten-lanthanum-scandium alloy black wire; the process and conditions of this step were consistent with those of Example 1;
9. The 0.52mm black filament was cleaned by electrolytic cleaning into 0.50mm ±0.005mm tungsten-lanthanum-scandium alloy white filament, which could be processed into the filament of microwave oven heating device.
10. The 0.50mm tungsten-lanthanum alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Example 5

1. According to the formula in Table 1, 5L of deionized water was added to a certain amount of lanthanum nitrate-hafnium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate-hafnium nitrate solution to ammonia NH₃•H₂O solution was 5: 1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum-hafnium doped powder with uniform doping and low impurity content was obtained;
4. The tungsten-lanthanum-hafnium doped powder was first reduced to tungsten-lanthanum-hafnium powder of appropriate particle size in reduction furnaces with temperatures of 650°C, 750°C, 850°C and 900°C in the four temperature zones.
5. The obtained tungsten-lanthanum-hafnium powder and tungsten carbide were loaded into a high-speed powder mixer for solid-solid powder mixing for 2 hours, and then sieved to obtain mixed tungsten-lanthanum-hafnium alloy powder with a content of 0.3% La₂O₃ + 0.2% HfO₂ +0.5%WC;
6. The powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. Sintered billets with oxide particle size <2.0 µm and density 18.0 g/cm were obtained by high temperature sintering. Wherein, the process and conditions of this step were consistent with those of Example 1;
8. Multiple rotary forging and drawing processes were used to process the 17mm diameter sintered billet into 0.52mm±0.005mm diameter tungsten-lanthanum-hafnium alloy black wire; the process and conditions of this step were consistent with those of Example 1;
9. The 0.52mm black filament was cleaned by electrolytic cleaning into 0.50mm ±0.005mm tungsten-lanthanum-hafnium alloy white filament, which could be processed into the filament of microwave oven heating device.
10. The 0.50mm tungsten-lanthanum-hafnium alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Example 6

1. According to the formula in Table 1, 5L of deionized water was added to a certain amount of lanthanum nitrate-hafnium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate-hafnium nitrate solution to ammonia NH₃•H₂O solution was 5:1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum-hafnium doped powder with uniform doping and low impurity content was obtained;
4. The tungsten-lanthanum-hafnium doped powder was first reduced to tungsten-lanthanum-hafnium powder of appropriate particle size in reduction furnaces with temperatures of 650°C, 750°C, 850°C and 900°C in the four temperature zones.
5. The obtained tungsten-lanthanum-hafnium powder and tungsten carbide were loaded into a high-speed powder mixer for solid-solid powder mixing for 2 hours, and then sieved to obtain mixed tungsten-lanthanum-hafnium alloy powder with a content of 0.3% La₂O₃ + 0.2% HfO₂ +0.5%WC;
6. The powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. Sintered billets with oxide particle size <2.0 µm and density 18.0 g/cm were obtained by high temperature sintering. The process and conditions of this step were consistent with those of Example 1;
8. Multiple rotary forging and drawing processes were used to process the 17mm diameter sintered billet into 0.52mm±0.005mm diameter tungsten-lanthanum-hafnium alloy black wire; the process and conditions of this step were consistent with those of Example 1;
9. The 0.52mm black filament was cleaned by electrolytic cleaning into 0.50mm ±0.005mm tungsten-lanthanum-hafnium alloy white filament, which could be processed into the filament of microwave oven heating device.
10. The 0.50mm tungsten-lanthanum-hafnium alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Example 7

1. According to the formula in Table 1, 5L of deionized water was added to a certain amount of lanthanum nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate solution to ammonia NH₃•H₂O solution was 5: 1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum doped powder with uniform doping and low impurity content was obtained;
4. The tungsten-lanthanum doped powder was first reduced to tungsten-lanthanum powder of appropriate particle size in reduction furnaces with temperatures of 650°C, 750°C, 850°C and 900°C in the four temperature zones.
5. According to the formula in Table 1, 5L of deionized water was added into the doping pot and heated to 80°C, then a certain amount of ammonium rhenate were added, stirred for 10 minutes to fully dissolve, a certain amount of tungsten lanthanum powder was added into the ammonium rhenate solution and stirred for 30 minutes, then the powder was dried by steam heating under vacuum, the steam pressure was 0.1 MPa to 0.3MPa, the vacuum degree in the pot was ≤ -0.02MPa, and finally rhenium-doped tungsten lanthanum powder with uniform doping and low impurity content was obtained;
6. The rhenium-doped tungsten lanthanum powder was first reduced to tungsten-lanthanum-rhenium of particle size of 1.5 µm in reduction furnaces with temperatures of 650°C, 750°C, 850°C and 900°C in the four temperature zones.
7. The obtained tungsten-lanthanum-rhenium alloy powder and tungsten carbide were loaded into a high-speed powder mixer for solid-solid powder mixing for 2 hours, and sieve to obtain mixed tungsten-lanthanum-rhenium alloy powder;
8. The powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
9. Sintered billets with oxide particle size <2.0 µm and density 18.0 g/cm were obtained by high temperature sintering. The process and conditions of this step were consistent with those of Example 1;
10. Multiple rotary forging and drawing processes were used to process the 17mm diameter sintered billet into 0.52mm±0.005mm diameter tungsten-lanthanum-rhenium alloy black wire; the process and conditions of this step were consistent with those of Example 1;
11. The 0.52mm black filament was cleaned by electrolytic cleaning into 0.50mm ±0.005mm tungsten-lanthanum-rhenium alloy white filament, which can be processed into the filament of microwave oven heating device.
12. The 0.50mm tungsten-lanthanum-rhenium alloy white wire was wound into a spring-shaped cathode filament for heating devices, with 10 turns and a pitch of 1.29±0.03mm.
13. The filament was assembled into a cathode structure with components such as assemblies, ceramics, and lead plates through heat treatment, and the heat treatment temperature was 600°C.
14. The filament in the cathode structure and the end cap of the component were welded together.
15. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
16. White ball assembly: the cathode structure, anode cylinder, antenna end cap and other components were assembled together.
17. The white balls were subjected to exhaust, vacuuming and high-temperature aging to complete the manufacturing of the black balls and the activation of their emission performance.
18. The black ball, heat sink, magnet, tube shell, and so on were assembled to finally obtain the heating device component containing the above-mentioned filament, and put into a microwave oven for use.

### Comparative Example 1:

1. According to the formula in Table 1, 5L of deionized water was added to a certain amount of thorium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of thorium nitrate solution to ammonia NH₃•H₂O solution was 5: 1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally thorium-tungsten doped powder with uniform doping and low impurity content was obtained;
4. The tungsten-lanthanum doped powder was first reduced to thorium-tungsten powder of particle size of 1.5 µm in reduction furnaces with temperatures of 650°C, 750°C, 850°C and 900°C in the four temperature zones.
5. The obtained tungsten-lanthanum powder and tungsten carbide were loaded into a V-shaped powder mixer for solid-solid powder mixing for 2 hours, and then sieved to obtain mixed tungsten-lanthanum alloy powder;
6. The tungsten-lanthanum powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. Sintered billets with oxide particle size <2.0 µm and density 18.0 g/cm were obtained by high temperature sintering. The process and conditions of this step were consistent with those of Example 1;
8. Multiple rotary forging and drawing processes were used to process the 17mm diameter sintered billet into 0.52mm±0.005mm diameter thorium-tungsten alloy black wire; the process and conditions of this step were consistent with those of Example 1;
9. The 0.52mm black filament was cleaned by electrolytic cleaning into 0.50mm ±0.005mm thorium-tungsten alloy white filament, which could be processed into the filament of microwave oven heating device.
10. The 0.50mm thorium-tungsten alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Comparative Example 2:

1. According to the formula in Table 1, 5L of deionized water was added to a certain amount of lanthanum nitrate-yttrium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate-yttrium nitrate solution to ammonia NH₃•H₂O solution was 5:1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum-yttrium doped powder with uniform doping and low impurity content was obtained;
4. The tungsten-lanthanum-yttrium doped powder was first reduced to tungsten-lanthanum-yttrium powder of particle size of 1.5 µm in reduction furnaces with temperatures of 650°C, 750°C, 850°C and 900°C in the four temperature zones.
5. The obtained tungsten-lanthanum-yttrium powder and tungsten carbide were loaded into a V-shaped powder mixer for solid-solid powder mixing for 2 hours, and then sieved to obtain mixed tungsten-lanthanum-yttrium alloy powder;
6. The tungsten-lanthanum-yttrium powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. Sintered billets with oxide particle size <2.0 µm and density 18.0 g/cm were obtained by high temperature sintering. The process and conditions of this step were consistent with those of Example 1;
8. Multiple rotary forging and drawing processes were used to process the 17mm diameter sintered billet into 0.52mm±0.005mm diameter rare tungsten-lanthanum-yttrium alloy black wire; the process and conditions of this step were consistent with those of Example 1;
9. The 0.52mm black filament was cleaned by electrolytic cleaning into 0.50mm ±0.005mm tungsten-lanthanum-yttrium alloy white filament, which could be processed into the filament of microwave oven heating device.
10. The 0.50mm tungsten-lanthanum-yttrium alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Comparative Example 3:

1. According to the formula in Table 1, 5L of deionized water was added to a certain amount of lanthanum nitrate-scandium nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate-scandium nitrate solution to ammonia NH₃•H₂O solution was 5:1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum-scandium doped powder with uniform doping and low impurity content was obtained;
4. The tungsten-lanthanum-scandium doped powder was first reduced to tungsten-lanthanum-scandium powder of particle size of 1.5 µm in reduction furnaces with temperatures of 650°C, 750°C, 850°C and 900°C in the four temperature zones.
5. The obtained tungsten-lanthanum powder and tungsten carbide were loaded into a V-shaped powder mixer for solid-solid powder mixing for 2 hours, and then sieved to obtain mixed tungsten-lanthanum-scandium alloy powder;
6. The tungsten-lanthanum powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
7. Sintered billets with oxide particle size <2.0 µm and density 18.0 g/cm were obtained by high temperature sintering. The process and conditions of this step were consistent with those of Example 1;
8. Multiple rotary forging and drawing processes were used to process the 17mm diameter sintered billet into 0.52mm±0.005mm diameter tungsten-lanthanum-scandium alloy black wire; the process and conditions of this step were consistent with those of Example 1;
9. The 0.52mm black filament was cleaned by electrolytic cleaning into 0.50mm ±0.005mm tungsten-lanthanum-scandium alloy white filament, which could be processed into the filament of microwave oven heating device.
10. The 0.50mm tungsten-lanthanum alloy white wire was wound into a spring-shaped cathode filament for heating devices, with 10 turns and a pitch of 1.29±0.03mm.
11. The filament was assembled into a cathode structure with components such as assemblies, ceramics, and lead plates through heat treatment, and the heat treatment temperature was 600°C.
12. The filament in the cathode structure and the end cap of the component were welded together.
13. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
14. White ball assembly: the cathode structure, anode cylinder, antenna end cap and other components were assembled together.
15. The white balls were subjected to exhaust, vacuuming and high-temperature aging to complete the manufacturing of the black balls and the activation of their emission performance.
16. The black ball, heat sink, magnet, tube shell, and so on were assembled to finally obtain the heating device component containing the above-mentioned filament, which was then put into a microwave oven for use.

### Comparative Example 4:

The cathode filament of Example 1 was used, and the carbonization current in the carbonization process of Example 1 was increased by 2A, so that the grains of the carbonized structure were increased, and the grain width was increased from 3-10 µm in Example 1 to 10-30 µm.

It should be noted that one of the means to control the grain size is to control the carbonization current. By adjusting the carbonization current, the grain size can be controlled within the desired range. The design point of the present application to achieve the desired effect is to control the grain size within the specified range of the present application.

### Comparative Example 5:

1. According to the formula in Table 1, 5L of deionized water was added to a certain amount of lanthanum nitrate solution, stirred for 10 minutes to fully dissolve, then 1L of ammonia NH₃•H₂O solution was added and stirred to neutralize, and the prepared mixed solution was evenly sprayed onto the blue tungsten placed in the doping pot and stirred; wherein, the volume ratio of lanthanum nitrate solution to ammonia NH₃•H₂O solution was 5: 1;
2. The doping pot was evacuated and heated with water (heating temperature 80°C, vacuum degree -0.025MPa), and stirring was carried out while heating;
3. Under vacuum, the powder was dried by steam heating, the steam pressure was 0.1 MPa to 0.3 MPa, the vacuum degree in the pot was ≤ -0.02MPa, and finally tungsten-lanthanum doped powder with uniform doping and low impurity content was obtained;
4. The tungsten-lanthanum doped powder was first reduced to tungsten-lanthanum powder of particle size of 1.5 µm in reduction furnaces with temperatures of 650°C, 750°C, 850°C and 900°C in the four temperature zones.
5. According to the formula in Table 1, 5L of deionized water was added into the doping pot and heated to 80°C, then a certain amount of ammonium rhenate were added, stirred for 10 minutes to fully dissolve, a certain amount of tungsten lanthanum powder were added into the ammonium rhenate solution and stirred for 30 minutes, then the powder was dried by steam heating under vacuum, the steam pressure was 0.1 MPa to 0.3MPa, the vacuum degree in the pot was ≤ -0.02MPa, and finally rhenium-doped tungsten lanthanum powder with uniform doping and low impurity content was obtained;
6. The rhenium-doped tungsten lanthanum powder was first reduced to tungsten-lanthanum-rhenium powder of particle size of 1.5 µm in reduction furnaces with temperatures of 650°C, 750°C, 850°C and 900°C in the four temperature zones.
7. The obtained tungsten-lanthanum-rhenium alloy powder and tungsten carbide were loaded into a high-speed powder mixer for solid-solid powder mixing for 2 hours, and the sieved to obtain mixed tungsten-lanthanum-rhenium alloy powder;
8. The powder with a particle size of 1.5 µm was pressed into a compact with a single weight of 3.0 kg at a pressure of 180 MPa by isostatic pressing, and the compact was pre-sintered at a low temperature in a hydrogen atmosphere to increase the strength of the compact;
9. Sintered billets with oxide particle size <2.0 µm and density 18.0 g/cm were obtained by high temperature sintering. The process and conditions of this step were consistent with those of Example 1;
10. Multiple rotary forging and drawing processes were used to process the 17mm diameter sintered billet into 0.52mm±0.005mm diameter tungsten-lanthanum-rhenium alloy black wire; the process and conditions of this step were consistent with those of Example 1;
11. The 0.52mm black filament was cleaned by electrolytic cleaning into 0.50mm ±0.005mm tungsten-lanthanum-rhenium alloy white filament, which could be processed into the filament of microwave oven heating device.
12. The 0.50mm tungsten-lanthanum-rhenium alloy white wire was wound into a spring-shaped cathode filament for heating devices, with 10 turns and a pitch of 1.29±0.03mm.
13. The filament was assembled into a cathode structure with components such as assemblies, ceramics, and lead plates through heat treatment, and the heat treatment temperature was 600°C.
14. The filament in the cathode structure and the end cap of the component were welded together.
15. The cathode structure was placed in the carbonization tank for carbonization. After exhaust, carbon-containing hydrocarbon gas (specifically methane) was introduced, and a certain current value (16A) of direct current was supplied to the cathode for heating, allowing the filament to complete carbonization in the hydrocarbon gas.
16. White ball assembly: the cathode structure, anode cylinder, antenna end cap and other components were assembled together.
17. The white balls were subjected to exhaust, vacuuming and high-temperature aging to complete the manufacturing of the black balls and the activation of their emission performance.
18. The black ball, heat sink, magnet, tube shell, and so on were assembled to finally obtain the heating device component containing the above-mentioned filament, which was then put into a microwave oven for use.

The tungsten alloy wires, tungsten alloy filaments and devices (microwave ovens) containing the filament components prepared in the above examples and comparative examples were tested for relevant performance indicators under the same test conditions. The test results were shown in Table below:

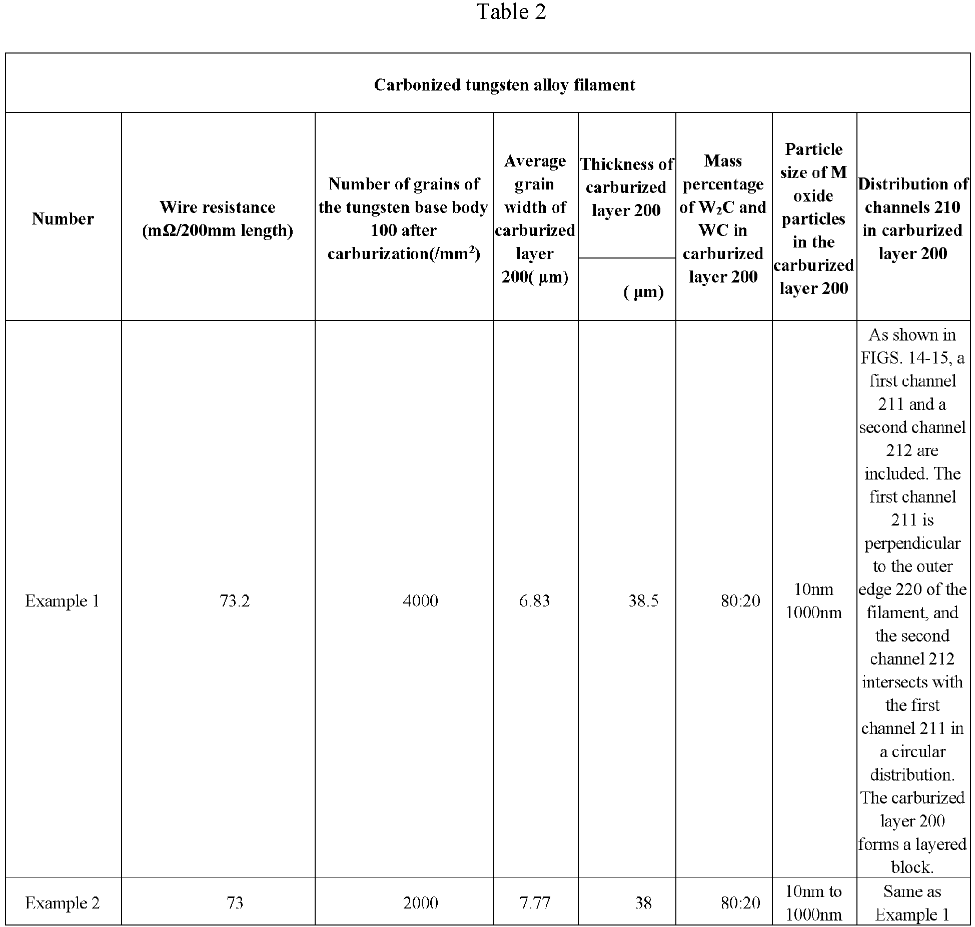

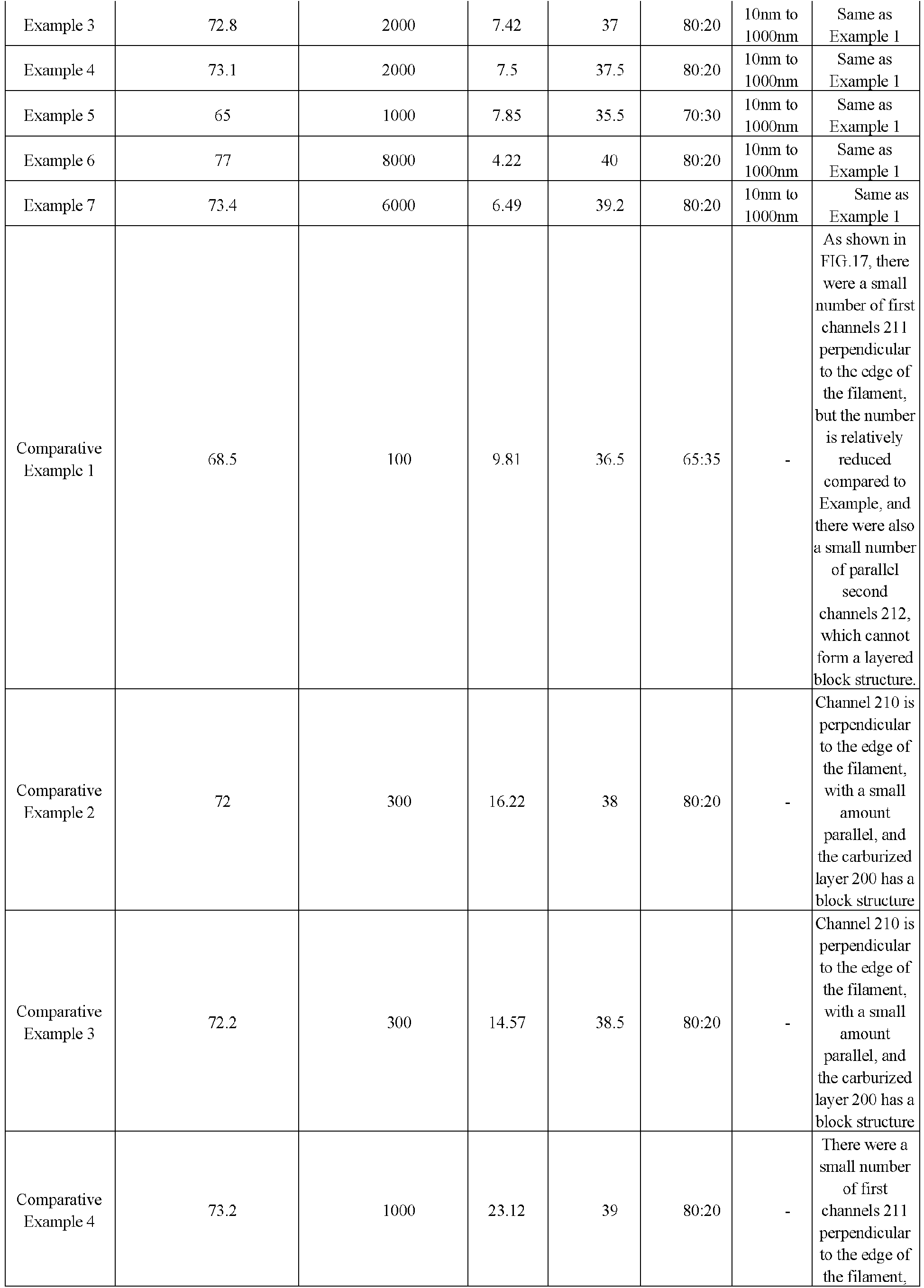

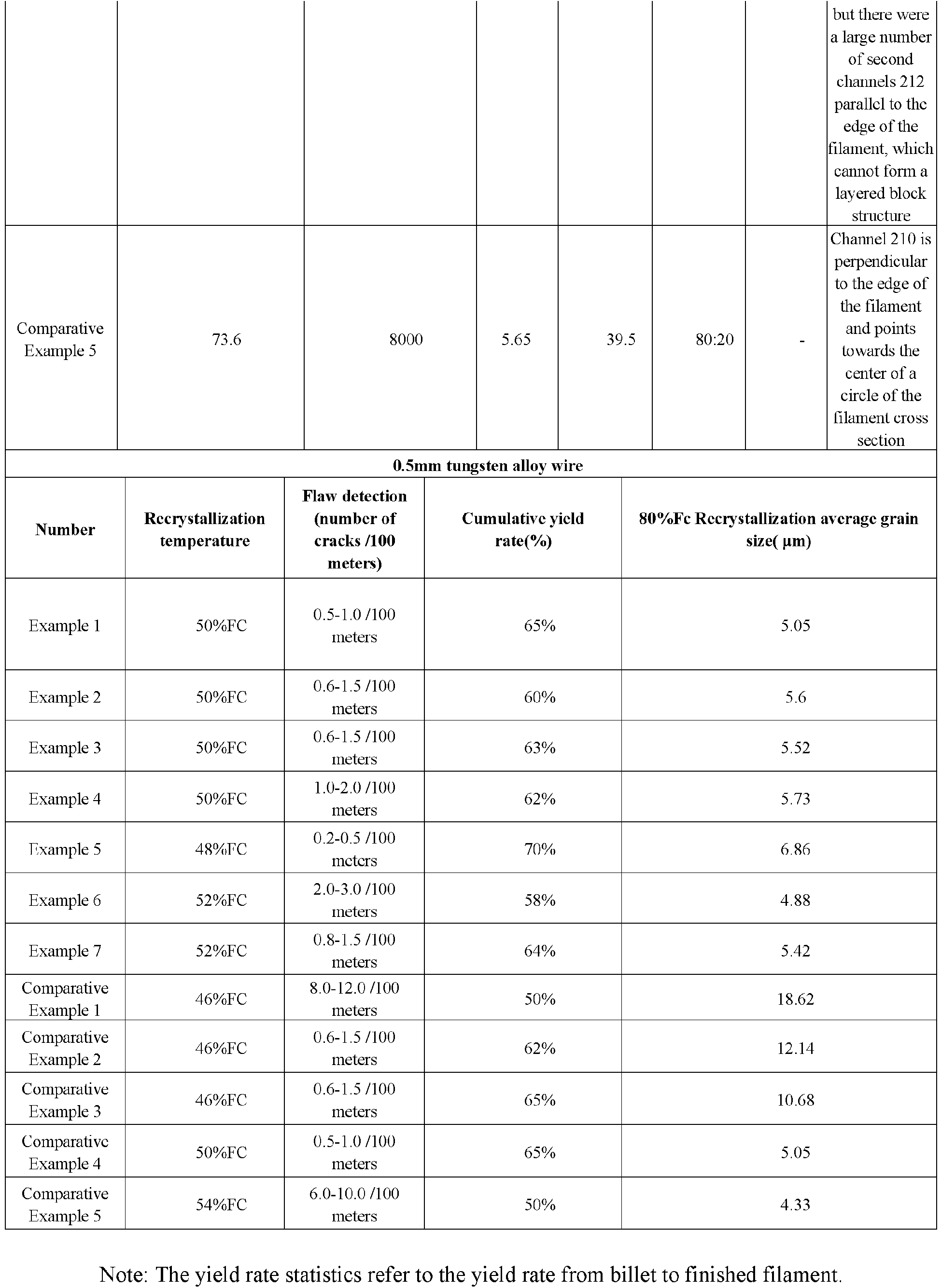

**Table 3**

| **Tungsten carbide alloy filament** | | | | | |
|---|---|---|---|---|---|
| **Number** | **Electronic work function (Ev)** | **Emission performance stabilization time (minutes)** | **Electron emission performance (mA)** | **Working temperature, °C** | **Working life** |
| Example 1 | 2.60 | 30 | 850 | 1150 | >500h |
| Example 2 | 2.55 | 30 | 650 | 1200 | >500h |
| Example 3 | 2.65 | 30 | 740 | 1250 | >500h |
| Example 4 | 2.75 | 30 | 700 | 1180 | >500h |
| Example 5 | 2.86 | 30 | 550 | 1200 | >500h |
| Example 6 | 2.48 | 30 | 1020 | 1220 | >500h |
| Example 7 | 2.68 | 30 | 600 | 1180 | >500h |
| Comparative Example 1 | 2.64 | 30 | 350 | 1600 | >500h |
| Comparative Example 2 | 2.98 | 5 | 260 | 1500 | <200h |
| Comparative Example 3 | 2.92 | 12 | 300 | 1400 | <200h |
| Comparative Example 4 | 2.61 | 5 | 300 | 1400 | <100h |
| Comparative Example 5 | 2.70 | 20 | 600 | 1200 | <300h |
| Characterization project for stable emission performance | Filament testing conditions: Ib=300mA, Ef=3.3V, then test the stability of anode voltage, power frequency, and filament waveform. If it works stably for 30 minutes, it is considered qualified | | | | |

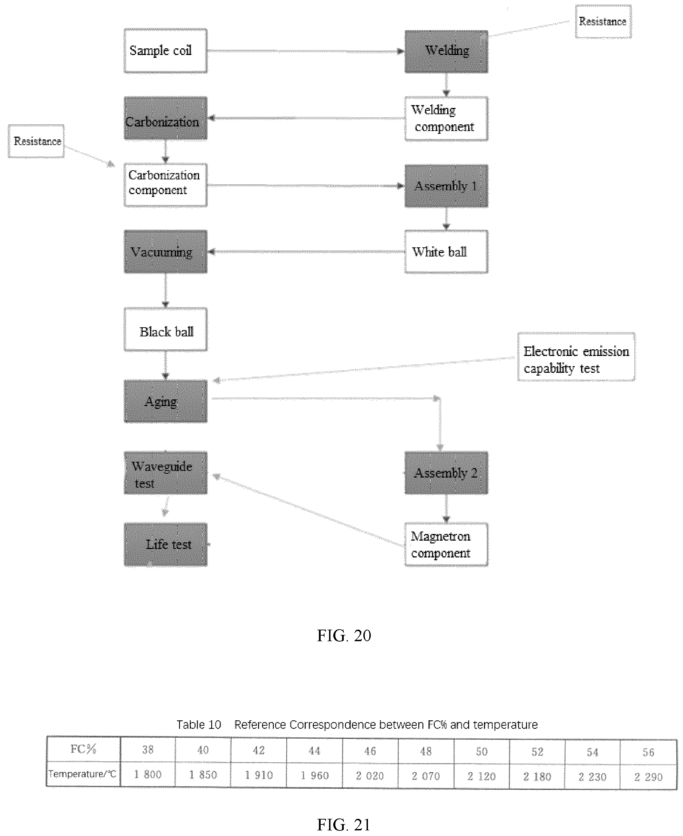

In Table 2-3, the test standard for the recrystallization temperature range item is GB T 23272-2009 Tungsten Wire for Lighting and Electronic Equipment; FC represents the size of the fuse current, and the conversion method of FC% and Celsius is as follows: the high temperature performance test method in Article 4.3.2.2 of the national standard GB/T23272-2009 Tungsten Wire for Lighting and Electronic Equipment as shown in FIG. 21 provides a reference correspondence between FC% and temperature, which can be converted by referring to the correspondence; the electron work function is determined according to the Richardson linear method; the working life of the tungsten alloy filament is tested according to the life test method in Article 6.5.2 of the national standard GB/T 23152-2008 Heating Device for Household Microwave Ovens, wherein the standard requires continuous operation of heating devices for microwave ovens to be >500h; wherein, the preparation process of steps 10-14 in the embodiment and the test nodes for each test item are shown in FIG. 20.

### 1. Comparison of Example 1 with Comparative Example 1, Comparative Example 1 is a thoriated tungsten filament:

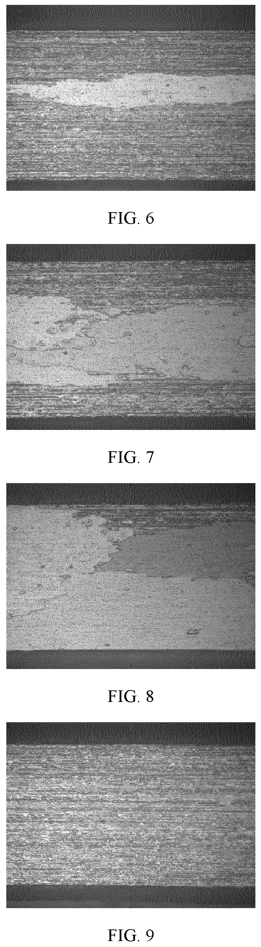

The metallographic conditions of Example 1 and Comparative Example 1 at different fusing currents are shown in FIGS. 5-11: It can be clearly seen that the recrystallization temperature of Example 1 is 50% FC (about 2120 °C), and the recrystallization temperature of Comparative Example 1 is 46% FC (about 2020 °C), which shows that the initial recrystallization temperature of the filament material of the present application is higher than that of the original thoriated tungsten wire material;

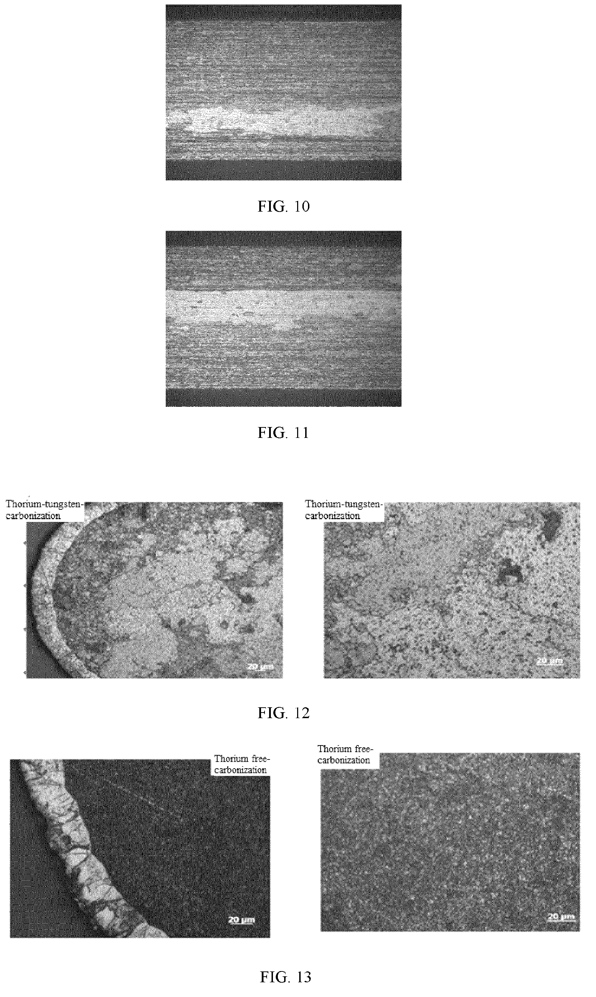

The grain size of the carbonized filament in Example 1 and Comparative Example 1 is shown in FIGS. 12-14: FIG. 13 shows that the carbonized filament structure in Example 1 is still a fine-grained structure, and FIG. 12 shows that the grains of the carbonized filament structure in Comparative Example 1 are significantly larger. From the data, the number of grains of the tungsten base body 100 after carburization of the base body 100 of Example 1 is 4000/mm², and that of Comparative Example 1 is 100/mm², and the grain width of the carburized layer 200 of Example 1 is 6.83 µm, and that of Comparative Example 1 is 9.81 [tM.

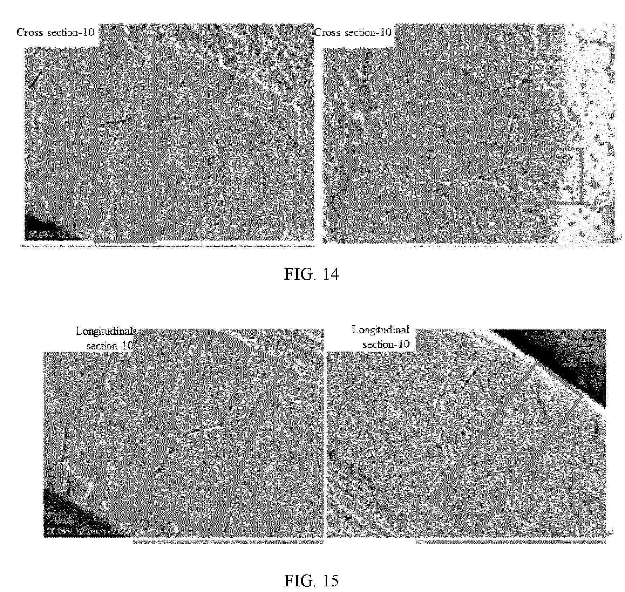

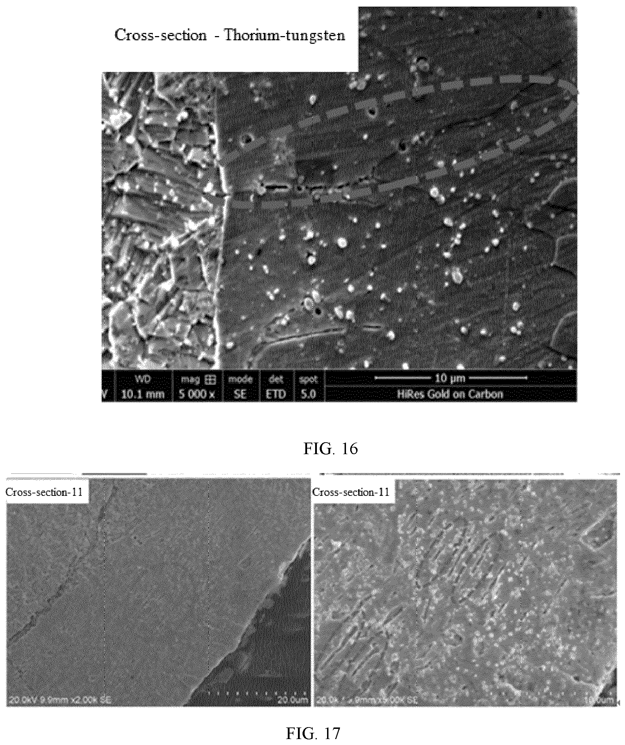

The distribution of channels 210 of the carbonized filament in Example 1 and Comparative Example 1 is shown in FIGS. 14-16. In the carburized layer 200 of the cross section of the carbonized filament in Example 1 shown in FIG. 14, there are many first channels 211 distributed perpendicular to the edge of the filament, and the second channels 212 cross the first channels to be distributed in a ring-like shape, and the carburized layer 200 forms a layered block. In the longitudinal section of the carbonized filament in Example 1 shown in FIG. 15, there are many first channels 211 distributed perpendicular to the edge of the filament; while in the cross section of the carbonized filament in Comparative Example 1 shown in FIG. 16, the number of first channels 211 distributed perpendicular to the edge of the filament is significantly reduced, and there are very few parallel second channels 212. The reason for this is that the grain width of the carburized layer in Comparative Example 1 is larger, and the number of its channels 210 is related to the size of the grains, and the grain size affects the formation of the channels 210.

In Example 1 of the present application, the layered structure in the carburized layer 200 separated by the second channel 212 is where the oxide of M is distributed, the first channel 211 is vertically distributed with the edge of the filament, connecting the inside of the base body 100, the second channel 212 and the edge of the filament, and the second channel 212 is combined with the first channel 211, which is beneficial to the outward migration of rare earth atoms and timely replenishment of rare earth elements evaporated from the surface, thereby improving the stability of material emission.

### 2. Comparing Example 1 with Comparative Example 4, the difference between Comparative Example 4 and Example 1 is that the grain size of the carburized layer is significantly larger:

The channels 210 distributed in the carburized layer 200 of the carbonized filament in the cross section and longitudinal section of the Comparative Example 4 shown in FIGS 17-18 are obviously parallel to the outer edge 220 of the filament, and cannot form a layered block structure. And the data in Tables 2-3 show that the emission performance of Example 1 is stable after working for 30 minutes, while the microwave disappearance phenomenon occurs in the Comparative Example 4 after working for less than 10 minutes; the emission effect is unstable.

The analysis of its mechanism is:
Although in Comparative Example 4, a structure similar to the channel 210 also appears inside the carburized layer 200, this channel 210 is parallel to the edge of the filament, and the cross section of the carburized layer 200 forms a layered structure. The reason for this is that the grain size in the carburized layer 200 is relatively large, at 23.12 µm, and the grain size affects the formation of the channel 210. It is difficult to form a large number of vertically distributed channels 210 in the carburized layer 200. The layered structure of the carburized layer 200 separates the interior of the base body 100 from the edge of the filament. When rare earth atoms migrate from the inside to the outside, when they encounter the channel 210 parallel to the edge of the filament, their migration is hindered and they cannot diffuse further outward or the diffusion becomes more difficult, so the emission performance is reduced.

In contrast, in Example 1 of the present application, the grain size in the carburized layer 200 is small, only 6.83 µm, thereby forming more second channels 212 and more first channels 211 that are cross-distributed, and the carburized layer 200 forms a layered block. The layered structure in the carburized layer 200 separated by the second channel 212 is where the oxide of M is distributed. The first channel 211 is vertically distributed to the edge of the filament, connecting the inside of the base body 100, the second channel 212 and the edge of the filament. The more the number of the above-mentioned channels 210, the more conducive it is to the migration of rare earth atoms. Example 1 combines the second channel 212 with the first channel 211, which is conducive to the outward migration of rare earth atoms and timely replenishment of rare earth elements evaporated from the surface, thereby improving the stability of material emission.

### 3. Comparison of Example 2 and Comparative Example 2, Example 4 and Comparative Example 3:

3.1 The difference between Example 2 and Comparative Example 2 is that: Comparative Example 2 does not add carbide raw materials, and there is no carbon in its components; By comparing the results of the two, it can be seen that: compared with Example 2, the recrystallization temperature of Comparative Example 2 is lower, the grain width of the carburized layer is larger, and the carburized layer 200 has a block structure, which is reflected in the performance: its emission performance stability deteriorates, the electron emission performance deteriorates, and the working life is shortened.

3.2 The difference between Example 4 and Comparative Example 3 is that: Comparative Example 3 does not add carbide raw materials, and there is no carbon in its components; By comparing the results of the two, it can be seen that: compared with Example 4, the recrystallization temperature of Comparative Example 3 is lower, the grain width of the carburized layer is larger, and the carburized layer 200 has a block structure, which is reflected in the performance: its emission performance stability deteriorates, the electron emission performance deteriorates, and the working life is shortened.

The mechanism is analyzed as follows: in the embodiment of the present application, by adding one or more oxides and carbides of M or carbon simple substance, the oxides and carbides of M in the tungsten base body will react at high temperature, and the generated M metal atoms are much smaller than the particles of M oxides. The migration and diffusion speed of M metal atoms in the tungsten base body will increase. Therefore, compared with the thoriated tungsten filament, it can achieve the same or even higher electron emission capability at a lower operating voltage (excitation temperature). Comparative Examples 2-3 do not add carbon raw materials, and obviously cannot achieve the above effect, and their electron emission performance deteriorates.

### 4. Comparison of Example 7 and Comparative Example 5:

The difference between Example 7 and Comparative Example 5 is that the Re content of Comparative Example 5 exceeds the specified range of the present application; by comparing the results of the two, it can be seen that the working temperature of Comparative Example 4 becomes higher and the working life becomes shorter. The inventor analyzed that rhenium has the functions of purifying grain boundaries and strengthening the solid solution of rhenium and tungsten. However, the addition of rhenium content exceeds the specified range of the present application, the rhenium content is too high, the strengthening effect is too large, and the work hardening is too large, which makes the wire more prone to cracks. It can be clearly seen in the wire flaw detection data that the number of flaw detection cracks in Example 7 is 0.8-1.5/100 meters, while that in Comparative Example 5 is 6-10/100 meters.

**In summary, it can be clearly concluded from the test results of the examples and comparative examples that:**
1. Through the observation of the cross sectional structure, longitudinal section structure and the carburized layer 200 of the longitudinal planed section structure,

Compared with the thoriated tungsten filament, the grain size of the carburized layer 200 of the thoriated tungsten lanthanum filament in the present application is smaller than that of the thoriated tungsten filament, and the grain width is slightly narrower than that of the thoriated tungsten, so that the number of channels 210 in the carburized layer 200 of the present application is more, and the organization of the carburized layer 200 at different positions in the filament provided by the present application has an organization similar to the cross shape of the first channel 211 and the second channel 212, forming a layered block structure. The first channel 211 is vertically distributed with the edge of the filament, connecting the second channel 212, the inside of the base body 100 and the edge of the filament, which is conducive to the outward migration of rare earth atoms and timely replenishment of the rare earth element evaporated from the surface, and improving the stability of the material emission. It can be clearly seen from the emission performance stabilization time data in the test results that there are differences in the emission performance of the filaments. Among them, the emission performance of the filament of the present application is stable, which is equivalent to that of the traditional thoriated tungsten filament. It can be seen that the tungsten carbide alloy material of the present application replenishes the rare earth element evaporated from the surface through the stable outward migration of rare earth, thereby improving the stability of the material emission. Without adding thorium element, it can also achieve the stable emission capability of the traditional thorium tungsten filament, solve the problem of poor stable emission capability of the existing thorium-free tungsten filament, and does not have the radioactive pollution problem of the traditional thorium tungsten filament.

2. There is a carbonization process in the preparation of the filament, and the carbonization temperature is 2000°C to 2200°C. The original thoriated tungsten filament is carbonized at this temperature, and the grain structure will show recrystallization. The grains are coarse, which makes the filament very easy to break after carbonization. If the vibration in the production process is slightly larger, the wire will break (the wire breakage rate is about 20,000 ppm to 30,000 ppm).

The recrystallization temperatures measured in Examples 1-7 are between 48% FC (about 2070°C) and 52% FC (about 2180°C), and the recrystallization temperature of Comparative Example 1 is 46% FC (about 2020°C). The initial recrystallization temperature of the filament material produced by the present application is higher than that of the original thoriated tungsten filament, and the filament structure after carburization is still a fine-grained structure (the grain size of the examples of the present application is significantly smaller than that of the comparative example), and the filament with a fine-grained structure is not easy to break;

3. It can be clearly seen from the test results that the processing performance of the filament material of the present application is better than that of the original thoriated tungsten, the number of flaw detection cracks is less (when the filament wire diameter can reach 500 µm, the number of flaw detection cracks of the filament is less than 2/100 meters), the processing yield is high, the wound filament is not easy to break, the production efficiency is improved, and the wire material has fewer cracks, and the proportion of broken wires during carbonization of the manufactured filament is also less.

4. It can be clearly seen from the electron emission performance parameters in the test results that the DC emission capacity of the heating device made of the filament of the present application is nearly twice that of the thoriated tungsten filament (Comparative Example 1), so that the heating device made of the filament provided by the present application can excite electrons at a lower voltage (Note: According to the use of heating devices in this field, the starting voltage of the thoriated tungsten heating device must be at least 2.0V. In order to ensure the starting voltage, the working voltage is set at 3.3V, while the starting voltage of Example 1 is 1.4V, and the working voltage can be in the range of 1.6 to 1.8V).

The operating temperature of the heating device of the present application can be reduced from 1500-1600°C to 1100-1500°C, such as 1200-1300°C, while the operating temperature of the traditional thoriated tungsten filament is 1600-1900°C. Therefore, the energy consumption and life of the heating device provided by the present application are improved.

In summary, the examples of the present application improve the emission stability of the material by controlling the grain size of the carburized layer 200 and coordinating with the M element component contained in the carburized layer 200, and replenishing the rare earth element evaporated from the surface layer through the stable outward migration of the rare earth. Without adding the thorium element, the stable emission capability of the traditional thorium tungsten filament can be achieved, solving the problem of the poor stable emission capability of the existing thorium-free tungsten filament, and does not have the radioactive pollution problem of the traditional thorium tungsten filament, which is more environmentally friendly.

In summary, the above technical solution provided by the present application includes at least the following working principles or mechanisms and beneficial effects:
(1) The grain width of the carburized layer 200 of the filament of the present application is controlled within a certain small size range, and the grain width of the carburized layer 200 is 1.0 µm to 15.0 µm. Compared with the thoriated tungsten filament, the grain size of the carburized layer 200 in the thorium-free filament of the present application is smaller than that of the thoriated tungsten filament, and the grain width is slightly narrower than that of the thoriated tungsten filament. The number of channels 210 in the carburized layer 200 of the present application is more. The organization of the carburized layer 200 at different positions in the filament provided by the present application has a layered block structure organization similar to that formed by the intersection of the first channel 211 and the second channel 212. The first channel 211 is vertically distributed with the edge of the filament, connecting the inside of the base body 100 and the second channel 212 with the edge of the filament, which is conducive to the outward migration of rare earth atoms and timely replenishment of rare earth elements evaporated from the surface, thereby improving the stability of material emission.
   The examples of the present application can significantly increase the initial recrystallization temperature of the material by doping the tungsten base body powder with oxides and carbides of M, and can still obtain extremely fine grains at the same carburization temperature as that of thoriated tungsten. This can improve the processing performance of the material, reduce the wire breakage rate during the production and use of the material, and reduce the electronic work function of the material. This can not only reduce the wire breakage rate and increase the yield rate to reduce production and transportation costs, but also effectively increase the service life of the filament, making its service life reach and far exceed the service life of the existing thoriated tungsten filament.
(2) The initial recrystallization temperature of the filament material provided by the present application is between 48% FC (about 2070°C) and 56% FC (about 2290°C). Therefore, after carburization at a temperature of 2000°C to 2100°C, the grains of the tungsten base body 100 are relatively fine, and the brittleness of the carbonized filament is less than that of the traditional thoriated tungsten filament material, which can reduce the wire breakage rate of customers during production and use.
(3) The processing performance of the filament material of the present application is better than that of the original thoriated tungsten, with fewer flaw detection crack points (when the filament wire diameter can reach 500 µm, the number of flaw detection crack points of the filament is less than 2/100 meters), the processing yield rate is high, the wound filament is not easy to break, the production efficiency is improved, and the wire has fewer crack points, and the proportion of carbonized broken wires in the manufactured filament is also low.
   In the filament material provided by the present application, the oxide of M (such as lanthanum oxide particles) has good plasticity. As the pressure processing proceeds, the oxide particles of M will become thin and long, and exist in a linear or quasi-linear shape; while the thorium oxide in the traditional thoriated tungsten material has poor plasticity. When the thoriated tungsten is processed to a certain extent, the thorium oxide will break. As the processing proceeds, the thorium oxide will appear as a string of particles; the types of rare earth oxides added by the present application and the changes in morphology and structure during the refinement process make the filament material have good processing performance. When preparing the wire material for winding the filament, the wire diameter of the filament material can be refined to 500 µm or less, and the number of flaw detection crack points is effectively reduced, thereby improving the yield rate.
(4) The thickness of the carburized layer 200 of the filament of the present application is preferably controlled within a range of 30 µm to 90 µm;
   The thickness of the conventional thoriated tungsten filament carburized layer 200 is generally 35 µm to 45 µm; the thicker the carburized layer 200 is, the longer the service life of the heating device is; however, the conventional thoriated tungsten carburized layer 200 cannot be made thicker, because if the thickness is too thick, the recrystallized grains of the tungsten base body 100 after carbide will be greatly coarsened, making the carbide filament very brittle, and the broken filament ratio in the heating device during production and use will reach 10,000 to 30,000 ppm;
   At present, the thickness of the filament carburized layer 200 of the embodiment of the present application is also basically 35-50 µm. Unlike the thoriated tungsten filament, the thickness of the carburized layer of the present application can be thickened, which is conducive to increasing the life. The initial recrystallization temperature of the present application is relatively high, and the tungsten base body 100 after carburization is still a fine-grained structure, and the filament breakage rate is very low. In this way, the present application can increase the thickness to increase the service life while ensuring that the filament breakage rate remains at a low level, making it possible to thicken the carburized layer 200.
(5) The operating temperature of the heating device made of the tungsten alloy filament provided by the present application (i.e., the operating temperature of the filament) can be reduced from 1500-1600°C to 1100-1500°C, such as within the range of 1200-1300°C, and still maintain a good working condition; while the operating temperature of the traditional thoriated tungsten filament is 1600-1900°C. Therefore, the energy consumption and life of the filament provided by the present application and the heating device made thereof will be improved.

### In summary:

The filament provided by the present application is prepared by adding one or more oxides and carbides or carbon simple substance of M into a tungsten base body 100. The combination of the oxides and carbides or carbon simple substance can improve the diffusion rate of the material in the base body 100. Compared with the thorium tungsten filament, the filament can achieve the same or even higher electron emission capability at a lower operating voltage (excitation temperature). At the same time, the grains of the carburized layer 200 are controlled within a certain small size range, and the channel 210 formed on the surface of the carburized layer 200 of the filament is organized to form a layered block. The first channel 211 and the second channel 212 and the edge of the filament are distributed quasi-vertically, which is conducive to the outward migration of rare earth atoms and the timely replenishment of the rare earth elements evaporated from the surface, thereby improving the stability of the material emission. The tungsten alloy filament material provided by the present application replaces the existing thoriated tungsten filament cathode, and has a service life equivalent to or exceeding that of thoriated tungsten. The present application can significantly reduce the initial recrystallization temperature of the material, improve the processing performance of the material, reduce the electron work function of the material, and refine the microstructure grain of the filament by doping M oxide and carbide or carbon simple substance into the tungsten base body 100 powder. It can reduce the wire breakage rate to reduce the production and transportation costs, and effectively increase the service life of the filament, so that its service life reaches and far exceeds the service life of the existing thoriated tungsten filament.

The filament provided in the present application can obtain an extremely high recrystallization temperature, and can still obtain extremely fine grains at the same carburization temperature as thoriated tungsten. The material has excellent shock resistance, and can reduce the breakage and failure of the filament during production, transportation and use.

It should be noted that:
In this article, "~" is used to indicate a numerical range, and the range indicated by this expression includes two endpoint values;

In summary, the specific parameters or some commonly used reagents or raw materials in the above embodiments are specific embodiments or preferred embodiments of the present application, but are not intended to limit the present application. Those skilled in the art may make adaptive adjustments within the scope of the present application.

It should be noted that the specific parameters or some commonly used reagents in the above embodiments are specific embodiments or preferred embodiments of the present application, rather than limiting the present application; those skilled in the art may make adaptive adjustments within the scope of the present application.

In addition, unless otherwise specified, the raw materials used may also be conventional commercial products in the art, or may be prepared by conventional methods in the art.

In addition, those skilled in the art should understand that, although there are many problems in the prior art, each embodiment or technical solution of the present application can be improved in only one or several aspects, without having to solve all the technical problems listed in the prior art or background technology at the same time. Those skilled in the art should understand that the content not mentioned in a claim should not be used as a limitation on the claim.

Although the terms such as carburized layer, base body, channel, and so on. are used more frequently in this article, the possibility of using other terms is not excluded. These terms are used only to more conveniently describe and explain the essence of the present application; interpreting them as any additional restrictions is contrary to the spirit of the present application.

Finally, it should be noted that the above embodiments are only used to illustrate the technical solutions of the present application, rather than to limit it. Although the present application has been described in detail with reference to the aforementioned embodiments, those skilled in the art should understand that they can still modify the technical solutions described in the aforementioned embodiments, or replace some or all of the technical features therein with equivalents. However, these modifications or replacements do not cause the essence of the corresponding technical solutions to deviate from the scope of the technical solutions of the embodiments of the present application.

## Claims

1. A tungsten carbide alloy filament, **characterized in that** the tungsten carbide alloy filament comprises a base body and a carburized layer attached to the outer surface of the base body;
the grain width of the carburized layer is in a range from 1.0 µm to 15.0 µm;
the components of the base body and the carburized layer both comprise tungsten, carbon, oxygen and M element;
the M element is selected from the group consisting of La, Y, Sc, Nd, Sm, Lu, Ce, Gd, Tb, Dy, Ho, Pr, Er, Tm, Yb, Eu, Hf, Zr, or a combination of any two or more thereof;
wherein the components of the tungsten carbide alloy filament do not contain thorium element.

2. The tungsten carbide alloy filament according to claim 1, **characterized in that** the M element in the carburized layer is in the form of an oxide, and the particle size of the oxide particles of M is in a range from 10nm to 1000nm; and the carbon element in the carburized layer is in the form of a carbide.

3. The tungsten carbide alloy filament according to claim 1, **characterized in that** a plurality of second channels were distributed on the carburized layer so that a layered structure stacked in a radial direction is formed on the cross section of the filament;
a plurality of first channels were distributed on the carburized layer, and at least part of the first channels were cross-arranged with the second channels, so that the layered structure is divided into a plurality of block structures.

4. The tungsten carbide alloy filament according to claim 1, **characterized in that** a plurality of first channels were distributed on the carburized layer; wherein at least part of the first channels were distributed along the radial direction of the cross section of the filament; and/or at least part of the first channels point to the center of a circle of the cross section of the filament;
a plurality of second channels were distributed on the carburized layer; at least part of the second channels were distributed along the circumferential direction of the cross section of the tungsten alloy filament; wherein at least part of the second channels were cross-arranged with the first channels.

5. The tungsten carbide alloy filament according to claim 1, **characterized in that** the components of the carburized layer comprise W₂C and WC; and a weight ratio of the W₂C to the WC is (60-100): (0-40).

6. The tungsten carbide alloy filament according to claim 1, **characterized in that**: in the base body, the M element is in the form of an oxide, and the carbon element is in the form of a carbide or a carbon simple substance.

7. The tungsten carbide alloy filament according to claim 1, **characterized in that** in the base body comprises the following components: 0.0005 wt% to 0.3 wt% of carbon element, 0.25 wt% to 2.6 wt% of M element, 0.05 wt% to 0.5 wt% of oxygen element, and the balance being the tungsten element and unavoidable impurities.

8. The tungsten carbide alloy filament according to claim 7, **characterized in that** in the components of the base body, the M element is in the form of an oxide, and the carbon element is in the form of a carbide or a carbon simple substance;
the oxide of M is selected from the group consisting of lanthanum oxide, yttrium oxide, scandium oxide, neodymium oxide, samarium oxide, lutetium oxide, cerium oxide, gadolinium oxide, terbium oxide, dysprosium oxide, holmium oxide, praseodymium oxide, erbium oxide, hafnium oxide, and zirconium oxide, or a combination of any two or more thereof; and
the carbide is selected from the group consisting of lanthanum carbide, zirconium carbide, yttrium carbide, hafnium carbide and tungsten carbide, or a combination of any two or more thereof.

9. The tungsten carbide alloy filament according to claim 7, **characterized in that** the components of the base body also comprise a metal element T; the T is selected from at least one of K, Re, Mo, Fe, and Co.

10. The tungsten carbide alloy filament according to claim 9, **characterized in that** a mass content of Re is less than 1000 ppm.

11. The tungsten carbide alloy filament according to claim 1, **characterized in that** the wire diameter of the tungsten carbide alloy filament is 800 µm or less.

12. The tungsten carbide alloy filament according to claim 1, **characterized in that** the operating temperature of the tungsten carbide alloy filament is in a range from 1100°C to 1500°C.

13. The tungsten carbide alloy filament according to claim 1, **characterized in that** the tungsten carbide alloy filament is a spiral structure, and the thickness of the carburized layer of at least one spiral turn reaches 30 µm to 90 µm.

14. A method for preparing a tungsten carbide alloy filament according to any one of claims 1 to 13, **characterized in that** the method comprises the following steps:
doping and powder making: sequentially performing the doping process, the reduction process and the powder making process to obtain a finished powder raw material; wherein the doping process is solid-liquid doping or solid-solid doping;
powder pressing: using isostatic pressing to press the finished powder raw material into a compact, and pre-sintering the compact at a low temperature in a hydrogen atmosphere to obtain a presintered billet;
high temperature sintering: sintering the presintered billet at high temperature by a high temperature sintering method to obtain a sintered billet;
pressure processing: processing the sintered billet into a tungsten alloy wire of a certain diameter; wherein, performing an oxidation annealing treatment during the thinning process;
cleaning: cleaning the tungsten alloy wire into tungsten alloy white wire;
winding: winding the tungsten alloy white wire into a spring-shaped filament structure;
cathode assembly: assembling the spring-shaped filament structure and components, ceramics, and lead components into a cathode structure through heat treatment;
welding: welding the filament structure in the cathode structure to the component end cap; and
carbonization: carbonizing the welded cathode structure.

15. The method for preparing a tungsten carbide alloy filament according to claim 14, **characterized in that**,
the temperature rise curve of the high temperature sintering step is as follows:
heating from room temperature to A1, with the heating time H1 ranging from 5 hours to 8 hours, and A1 ranging from 950°C to 1250°C; keeping warm at A1 for H2 hours, with H2 ranging from 1 hour to 3 hours;
heating from A1 to A2, with the heating time H3 ranging from 1.5 hours to 2.5 hours, and A2 ranging from 1300°C to 1500°C; keeping warm at A2 for H4 hours, with H4 ranging from 2.5 hours to 4.5 hours;
heating from A2 to A3, with the heating time H5 ranging from 1 hour to 3 hours, and A3 ranging from 1700°C to 1900°C; keeping warm at A3 for H6 hours ranging from 1 hour to 3 hours;
heating from A3 to A4, with heating time H7 ranging from 1 hour to 3 hours, and A4 ranging from 2050°C to 2250°C; keeping warm at A4 for H8 hours ranging from 5 hours to 10 hours; cooling naturally from A4 to obtain sintered billets;
the process of the pressure processing step is as follows:
the sintered billet is refined to an intermediate specification wire with a diameter of 1.5mm to 3.5 mm; and then the intermediate specification wire is oxidized and annealed at 1200°C to 1500°C with an annealing speed of 3 m/min to 10 m/min to obtain the tungsten alloy wire.

16. A heating device, **characterized in that** the heating device comprises the tungsten carbide alloy filament according to any one of claims 1 to 13.
